# EUROPEAN PATENT APPLICATION

(11) **EP 4 486 056 A1**
(43) Date of publication of application: **01.01.2025**
(21) Application number: 24184006.5
(22) Date of filing: 24.06.2024
(51) Int. Cl.: H04W 84/12, H04L 1/1829, H04L 1/1867, H04W 16/14, H04W 74/0816, H04W 88/06

(54) **ENHANCEMENTS OF FEEDBACK IN 802.11 TO ENHANCE THE PERFORMANCE OF LINK ADAPTATION, LATENCY-SENSITIVE TRAFFIC AND IN-DEVICE COEXISTENCE**

(30) Priority: 23.06.2023 IN 202321041989; 02.04.2024 US 202463573093 P; 21.06.2024 US 202418749819
(71) Applicant: Avago Technologies International Sales Pte. Limited, Singapore 768923 (SG)
(72) Inventor: VERMA, Sindhu, Irvine, 92618 (US); ADHIKARI, Shubhodeep, Irvine, 92618 (US); FISCHER, Matthew J., Irvine, 92618 (US); ERCEG, Vinko, Irvine, 92618 (US); JOSEPH, Bobby, Irvine, 92618 (US); ASOKAN, Pradhap, Irvine, 92618 (US)
(74) Representative: Dilg, Haeusler, Schindelmann Patentanwaltsgesellschaft mbH

(57) **Abstract**

A solution for providing improvements in performance of latency sensitive traffic, multi-link operation, link adaptation and in-device coexistence is disclosed. A device (102) with a Wi-Fi transceiver (120) and a second transceiver (110) sharing at least one antenna (142) can detect a burst of communications received by the second transceiver (110) exceeding a time period allocated for second communications. The device (102) can be in communication with a Wi-Fi AP to receive Wi-Fi communications. The device (102) can determine, responsive to the detection, a schedule (136) for the AP to transmit Wi-Fi communications to the device (102), the schedule (136) comprising a burst limit of a first time period on a periodic basis of a second time period. The device (102) can communicate the schedule (136) to the access point (104).

## Description

### CROSS-REFERENCE TO RELATED PATENT APPLICATIONS

This application claims the benefit of and priority to an Indian Provisional Patent Application No. 202321041989, filed June 23, 2023, and from a U.S. Provisional Patent Application No. 63/573093, filed April 2, 2024, both of which are incorporated herein by reference in their entirety and for all purposes.

### TECHNICAL FIELD

This disclosure generally relates to systems and methods of communication in wireless local area networks, including implementation of link adaptation, traffic latency and coexistence between different wireless technologies.

### BACKGROUND

Wireless communication devices can utilize various network communication chipsets or subsystems that can be configured to implement different wireless communication technologies, such as wireless local area network (WLAN) technologies, cellular communication technologies, Bluetooth, Ultra-Wideband (UWB), or any other wireless communication technologies. Wireless communication devices can operate in a variety of environments and circumstances.

### SUMMARY

The technical solutions of the present disclosure provide enhancements to feedback mechanisms aimed at reducing in-device coexistence (IDC) issues in wireless communication systems, such as those encountered with 802.11 Wi-Fi communications. These enhancements can improve link adaptation, reduce latency, and optimize IDC between Wi-Fi and other wireless features sharing resources (e.g., antennas) of the host device. When a non-Wi-Fi wireless communication burst exceeds its allocated time for shared resource usage, the technical solutions can generate a schedule for the Wi-Fi access point to time and synchronize its transmissions, avoiding overlap with the prolonged burst. For instance, a non-Wi-Fi communication can use a shared resource at a time instant occurring periodically or previously not known to the Wi-Fi module. The solutions can tailor the schedules of Wi-Fi communications to avoid overlap with the non-Wi-Fi communication while not adversely impacting the fidelity of the Wi-Fi communication. When a Wi-Fi access point receives a notification from a device about an IDC issue between two technologies on that device, the technical solutions can configure the AP to delay acknowledgments for already transmitted data frames without marking them as failed. The solutions can utilize frame acknowledgments to provide transmission information, even in the event of failure, allowing for more informed adjustments by the access point. For example, when low latency packets are identified during the transmission of a preceding frame, the solutions can include the low latency packet in the ongoing frame transmission, thereby improving throughput and communication efficiency.

An aspect of the technical solutions is directed to a method. The method can include detecting, by a device comprising a Wi-Fi transceiver and a second wireless transceiver sharing at least one antenna, a burst of communications. The burst of communications can be received by the second wireless transceiver exceeding a time period allocated for second wireless communications. The device can be in communication with an access point (AP) to receive Wi-Fi communications. The method can include determining, by the device responsive to the detection, a schedule for the AP to transmit Wi-Fi communications to the device. The schedule can include a burst limit of a first time period on a periodic basis of a second time period. The method can include the device communicating the schedule to the access point.

The first time period can be allocated for receiving the Wi-Fi transmissions and the second time period corresponds to a time duration between a start of the first time period and a start of a next first time period on the periodic basis of the second time period. The next first time period can be allocated for receiving the Wi-Fi transmissions. The method can include the device receiving, during the next first time period, an aggregated medium access control protocol data unit (AMPDU) of the Wi-Fi communication. The AMPDU can include a size adjusted according to the next first time period.

The method can include receiving, by the device during the next first time period, an AMPDU of the Wi-Fi communication. The AMPDU can include a size maximized to fit within the next first time period and allow for a completion of transmission of a block acknowledgement (BA) of the AMPDU within the next first time period.

The method can include detecting, by the device, that a second burst of communications received by the second wireless transceiver overlaps with a portion of the first time period allocated to receive Wi-Fi communications from the AP according to the schedule. The method can include adjusting, by the device, responsive to the overlap, the schedule. The schedule can be adjusted to change at least one of a duration of the first time period or a duration of the second time period according to a duration of the second burst of communications. The second wireless communications can correspond to at least one of: Bluetooth communications, Ultra-Wideband (UWB) communications, Long-Term Evolution (LTE) communications, Licensed Assisted Access (LAA) communications, New Radio (NR) communications or New Radio-Unlicensed (NR-U) communications.

The method can include receiving, by the device from the access point, an aggregated medium access control protocol data unit (AMPDU) of the Wi-Fi communication. The method can include generating, by the device, a block acknowledgement (BA) for the AMPDU. The method can include communicating, by the device, the schedule to the access point, via the BA. The schedule can be for receiving the Wi-Fi communications via a first communication channel of a plurality of communication channels.

The method can include detecting, by the device, a second burst of communications received by the second transceiver exceeding a second time period allocated for second wireless communications. The method can include determining, by the device responsive to the detection of the second burst of communications, a second schedule for the access point to transmit Wi-Fi communications to the device via a second channel of the plurality of channels, the second schedule comprising a second burst limit of a third time period on a second periodic basis of a fourth time period. The method can include communicating, by the device, the second schedule to the access point.

An aspect of the technical solutions can be directed to an access point (AP), such as a Wi-Fi AP device. The access point can include one or more processors coupled with memory. The one or more processors can be configured to receive, from a device, a block acknowledgement (BA) comprising information identifying existence of an in device-coexistence issue on the device. The one or more processors can be configured to determine, responsive to identifying the in device-coexistence issue, to allow one or more BAs from the device responsive to one or more aggregated medium access control protocol data units (AMPDUs) from the AP to be delayed past a short interframe space (SIFS) without being identified as a failure. The one or more processors can be configured to receive, after the SIFS and responsive to the determination, a second BA from the device. The second BA can include a plurality of acknowledgements corresponding to a plurality of AMPDUs received from the AP.

The one or more processors can be configured to determine, responsive to the determination, that a plurality of transmissions for the plurality of AMPDUs are successful regardless of the second BA received after the SIFS. The one or more processors can be configured to receive, from a second device, a block acknowledgement (BA) comprising information not identifying an in device-coexistence issue on the second device. The one or more processors can be configured to transmit, to a second device, an AMPDU and determine that a BA for the AMPDU is not received within the SIFS. The one or more processors can be configured to identify that the transmission of the AMPDU has failed responsive to the BA not being received within the SIFS.

The one or more processors can be configured to identify that the device is configured for Wi-Fi communication in which transmission of one or more BAs for the one or more AMPDUs is delayed until after one or more SIFSs following the one or more AMPDUs. The one or more processors can be configured to transmit, responsive to the configuration, a provision to communicate the plurality of AMPDUs according to the configuration. The provision can be indicated in at least one of a header of a physical layer or a header of a medium access control header of an AMPDU of the plurality of AMPDUs.

The one or more processors (e.g., processors of a receiver) can be configured to identify, from the information a channel quality information indicating a signal-to-interference-plus-noise ratio (SINR) margin. The one or more processors (e.g., processors of a receiver) can be configured to adjust, responsive to the SINR margin, a modulation and coding scheme (MCS) for transmissions to the device. The one or more processors (e.g., processors of a receiver) can be configured to identify, from the information an indication corresponding to at least one of: a modulation and coding scheme (MCS) for transmissions to the device, a signal strength of the one or more AMPDUs or presence of one or more hidden nodes.

The one or more processors (e.g., processors of a transmitter) can be configured to adjust, responsive to the indication, for a next AMPDU to be transmitted to the device, at least one of: the MCS, the signal strength, or transmission power corresponding to the one or more hidden nodes. The one or more processors (e.g., processors of a transmitter) can be configured to determine, from the information, that all of the MPDUs within the one or more AMPDUs failed to be received by the device.

An aspect of the technical solutions is directed to a device communicating wirelessly with an access point (AP). The device can include one or more processors coupled with memory. The one or more processors can be configured to identify a physical protocol data unit (PPDU) created and waiting to be transmitted to an access point (AP) during a current TXOP. The one or more processors can be configured to identify a low latency packet received by the device during the current TXOP, the low latency packet to be communicated to the AP within a next PPDU following the PPDU. The one or more processors can be configured to insert the low latency packet into the PPDU. The one or more processors can be configured to transmit the PPDU comprising the low latency packet to the AP within the current TXOP. The one or more processors can be configured to identify the low latency packet within the next PPDU scheduled for transmission via a next TXOP following the current TXOP. The one or more processors can be configured to determine to insert the low latency packet into the PPDU.

### BRIEF DESCRIPTION OF THE DRAWINGS

These and other aspects and features of the present embodiments will become apparent to those ordinarily skilled in the art upon review of the following description of specific embodiments in conjunction with the accompanying figures.
FIG. 1 is an example block diagram of a system for providing enhancements of feedback to enhance the performance of link adaptation, latency-sensitive traffic and in-device coexistence.
FIG. 2 is a block diagram illustrating an architecture for a computer system that can be employed to implement elements of the systems and methods described and illustrated herein.
FIG. 3 is an example plot for managing latency-sensitive traffic for a structure with enhanced transmission opportunity (TXOP), protocol data unit (PDU) and an aggregated MAC protocol data unit (AMPDU).
FIG. 4 is another example of a plot for managing a latency-sensitive traffic for a structure with enhanced TXOP, PDU and AMPDU.
FIG. 5 is an example plot of 802.11 activity bursts and burst limits, followed by inactivity period.
FIG. 6 illustrates another example of plot of 802.11 activity bursts, followed by inactivity period with dynamic adjustment of burst duration.
FIG. 7 is an example method for generating a schedule for Wi-Fi communications in response to a burst of communications exceeding its allocated time.
FIG. 8 is an example method for a Wi-Fi AP to delay receipt of block acknowledgements (BAs) for transmitted AMPDUs in response to an IDC issue reported by the UE.
FIG. 9 is an example method for promoting transmission of a low latency packet of an MPDU scheduled for a later transmission by inserting the low latency packet into a MAC protocol data unit (MPDU) scheduled for transmission in the current or upcoming TXOP.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEEP802.11ac^{™}; and IEEE P802.11be^{™} draft version D3.0 through D6.0 standards. Although this disclosure can reference aspects of these standard(s), the disclosure is in no way limited by these standard(s).

The present embodiments shall now be described in detail with reference to the drawings, which are provided as illustrative examples of the embodiments so as to enable those skilled in the art to practice the embodiments and alternatives apparent to those skilled in the art. Figures and examples below are not meant to limit the scope of the present embodiments to a single embodiment, but other embodiments are possible by way of interchange of some or all of the described or illustrated elements, or those apparent to a person of ordinary skill in the art. Certain elements of the present embodiments can be partially or fully implemented using known components, only those portions of such known components that are necessary for an understanding of the present embodiments shall be described, and detailed descriptions of other portions of such known components will be omitted so as not to obscure the present embodiments. Embodiments described in their illustrated contexts should not be limited thereto. For example, embodiments described as being implemented in software should not be limited to such implementation alone, but they can include embodiments implemented in hardware, or combinations of software and hardware, and vice-versa, as will be apparent to those skilled in the art, unless otherwise specified herein. In the present specification, an embodiment showing a singular component should not be considered limiting. Rather, the present disclosure is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present embodiments encompass present and future known equivalents to the known components referred to herein by way of illustration.

Wireless communication devices, also referred to as user equipment (UE), can be configured to provide multiple types of wireless communications to the user, including Wi-Fi, Bluetooth, Ultra-Wideband (UWB), Long-Term Evolution (LTE), Licensed Assisted Access (LAA), New Radio (NR) or New Radio-Unlicensed (NR-U). Sometimes, some of these non-Wi-Fi technologies can be configured to share some of the UE resources with the Wi-Fi functionalities on the UE. These shared resources can include, for example, the antenna systems, the baseband processors or other processing capabilities, the power management circuitry or the radio frequency (RF) front-end components (e.g., filters, amplifiers and switches) of the UE or any other hardware resources that can cause interference between different types of wireless communications. When these shared resources are used for communications by the non-Wi-Fi technologies, the Wi-Fi communications may have to wait until the shared resources become available to continue with their communications. The UE can include systems that oversee and coordinate communication events between these technologies to facilitate the in-device coexistence (IDC) between these technologies on the same UE and avoid collisions or failed transmissions.

Sometimes, a wireless communication device can experience an in-device coexistence issue, in which multiple wireless technologies, such as Wi-Fi and Bluetooth, interfere with each other's operations, resulting in degraded performance and communication inefficiencies. For instance, wireless transmissions from the non-Wi-Fi technologies can experience incoming bursts of communication from their transmitting devices that exceed the allocated time for their wireless communications during periodically or dynamically occurring time durations with which the Wi-Fi communications may overlap. A burst of communication can include any group (e.g., two or more) data packets being transmitted in a sequence. In such instances, prolonged communication bursts can encroach into the time interval allocated for Wi-Fi communications. Unless avoided by the Wi-Fi communications, such encroachments can cause an IDC issue (e.g., a conflict or an overlap) involving the two technologies seeking to use the same shared resources at the same time. In such instances, a Wi-Fi access point, unaware of an ongoing IDC issue at the device may rely on its predetermined allocated time and proceed transmit data frames for the Wi-Fi communications. Such transmissions however can fail due to the IDC issue caused by the extended communication burst of the other technology, potentially leading the Wi-Fi access point to misdiagnose the issue and determine that the device is not capable of maintaining a high data rate, reducing the data rate of upcoming transmissions. As such, it is beneficial for devices to improve the management of IDC issues between different technologies, while informing the Wi-Fi access points to allow the Wi-Fi access points make more informed assessments of the communication issues with the device. The burst of communications that the second wireless transceiver participates in can be either periodic with a predetermined schedule (e.g., first and second periods) or non-periodic with dynamic instances of bursts occurring non-periodically.

Also, in some instances, the wireless communication devices or systems can be limited in that the block acknowledgements (BAs) transmitted in response to aggregated medium access point (MAC) protocol data units (AMPDUs) can provide insufficient information on relating the cause of failure of the MAC protocol data units (MPDUs) or the margin with which they failed.

An AMPDU can be an arrangement of multiple MAC protocol data units (MPDUs) organized into a single frame for transmission. AMPDU can include an arrangement of any group of data packets to be transmitted as a single burst communication for a more efficient communication and improved throughput. Recipient of the AMPDU can send back to the sender an acknowledgement of a successful transmission in a form of a block acknowledgement (BA).

The block acknowledgement (BA) can include any acknowledgement response (e.g., acknowledgement 126) for acknowledging or providing a response about received AMPDU transmissions. The acknowledgement 126, such as the BA, can include a message or transmitted data that indicates a single acknowledged receipt or a response for one or more received data frames. BA can be a feature that allows for acknowledgement of multiple data frames (e.g., MPDUs of an AMPDU, or multiple AMPDUs) in a single response. The feedback can be provided by the recipient only if at least one MPDU of all the constituent MPDUs of an AMPDU is received correctly.

There can also be an issue with link adaptation convergence as it can be difficult to try multiple modulation and coding schemes (MCSs) or number of spatial streams (NSSs) together efficiently and flexibly as each physical protocol data unit (PPDU) with an MCS/NSS can be tried one at a time followed a gap of either two lengths of short interframe space (SIFS) (e.g., 2*SIFS) and a BA, or SIFS. A SIFS, or a Short Interframe Space, can include any fixed time interval used in Wi-Fi communications to separate transmissions of data frames, ensuring efficient and orderly access to the wireless medium. For instance, SIFS can be used to allow for timely receipt of an acknowledgement 126 (e.g., a BA) following a transmission of an AMPDU. For example, the BA for AMPDU transmissions can be expected by the Wi-Fi devices to be received at or during the SIFS gap. Not receiving the BA under the proposed scheme can be identified as the presence of an IDC issue. Upon such a detection, the technical solutions can configure the receiver to allow the BA to be delayed and to be received during a time period after SIFS, but within a time frame of that delayed time period. Convergence of the link adaptation algorithm can be made faster when composite feedback can be obtained for multiple MCSs/NSSs and only when the originator desires. The present solutions can also have high channel state information (CSI) overhead and can lack more granular MCSs.

For example, a recipient of an AMPDU (e.g., UE 102) can face processing constraints that prevent it from responding with a BA within a SIFS after receiving AMPDU's PPDU. A Physical Protocol Data Unit (PPDU) can include any data frame used in wireless communications that includes data packets (e.g., MAC Protocol Data Units or MPDUs) along with any related physical layer information for transmission and reception over the wireless medium. When an AMPDU recipient responds with BA at SIFS after the eliciting AMPDU's PPDU, the recipient may be incapable of doing so due to internal processing limitations (e.g., processing delay beyond SIFS, based on MCS/byte count/MPDU count, etc.), which can be triggered by prolonged communication bursts of second communications 112. These constraints can make the recipient incapable of receiving later MPDUs within a long AMPDU. To address such limitations, the minimum MPDU Start Spacing parameter can be used. The minimum MPDU Start Spacing can be a parameter to take care of processing constraints. This parameter can specify the minimum spacing between any 2 MPDUs (e.g., in microseconds) and irrespective of any MCS, bandwidth, or MIMO order, and other factors. The spacing may be guaranteed even through padding which can introduce inefficiencies with respect to transmission resources. The technical solutions can allow for such a solution to be exercised only when a specified maximum MPDU count or MPDU byte count are exceeded at the recipient, thereby avoiding wasting of resources.

In terms of IDC functionalities at the recipient (e.g., UE 102), when an AMPDU recipient is used to respond with BA at SIFS after the eliciting AMPDU's PPDU, the recipient can be incapable of responding due to an upcoming burst of activity on another in-device technology (e.g., second communications 112, such as Bluetooth, UWB, LTE or NR) which can prevent the UE 102 from receiving the later MPDUs or transmitting the BA due to in-device interference.

With respect to handling of non-scheduled triggered recipient (NSTR) clients at the AP, to avoid UL transmission that may cause destructive interference to recipient's ongoing reception on another link, the transmitter device can perform consecutive DL transmissions to multiple recipients and then trigger BA in a multi-user (MU) fashion instead of sending the BA immediately. With respect to link adaptation convergence, multiple MCSs/NSSs may not be tried together, and each combination may be tried one at a time followed by the corresponding feedback. Convergence of the link adaptation algorithm can be made faster if composite feedback can be obtained for multiple MCSs/NSSs and only when the originator desires. Having mandatory intermediate BA can reduce efficiency.

Limitations of the TXOP/PPDU/AMPDU structure can include a lack of time margin in a medium lockout (MLO) for AMPDU construction. The medium lock duration (MLD) may be prepared to transmit AMPDUs simultaneously on both the links and may have prepared transmissions accordingly with different sequence number sets. However, if one of the links wins access first or if the other link becomes busy, the earlier sequence numbers can be transmitted on the winning link especially in case of an NSTR/EMLSR MLD. If the bandwidth for which access to any link is won, is different from what was assumed while preparing disjoint sets of transmissions for the two links, the AMPDU contents may be assembled again. Transmitting without rebuilding in some cases may cause unnecessary retransmission of MPDUs or transmission of MPDUs with unnecessary gaps in sequence numbers. An STR MLD which wants to align PPDUs on 2 links, may be waiting to decode length information of a transmission from an NSTR ML device on one of the links (say link1) while it wins access to the other link (say link2). If the STR MLD does not align the end of its link2 transmission with the end of its link1 reception, the NSTR ML device having missed the link2 preamble, may collide with the link2 transmission.

Limitations of the TXOP/PPDU/AMPDU structure can be such that in MLO, events on a link 1 might impact decisions regarding transmissions on a link 2. For example, the MLD might receive BA correctly on link 1, but not on link 2, and in an asynchronous manner. In this case, the transmitter MLD may want the flexibility to prioritize retransmissions of erroneous packets from link 2 even though link 1 transmission started earlier than the end of link 2 transmission. Also, in MLO and in case of NSTR ML recipients, PPDUs on the two links may need to be aligned so that UL transmission of BA on one link is not destructive to reception on another link. The LENGTH and contents of an AMPDU may be not adjustable once the transmission of a PPDU starts, as LENGTH is contained in the L-SIG.

Handling of latency sensitive transmissions can be such that if latency-sensitive traffic arrives newly, it may wait for the end of an ongoing transmission burst/TXOP before it can be transmitted. AMPDUs can be constructed as long as feasible, since longer AMPDUs increase MAC efficiency by omitting intermediate PHY header/SIFS/BA. For long AMPDUs, if the initial PHY header is missed, decoding can fail for the receiving device and preamble detection can fail for any device performing CCA. The problem can be especially pronounced in case of hidden nodes, fading channels and blindness in NSTR/EMLSR ML devices. Link adaptation convergence can involve multiple MCSs/NSSs that cannot be tried together, and each combination be limited to be tried one at a time followed by corresponding feedback.

Moreover, there can be a lack of recipient's control over burst durations. In-device-coexistence (IDC) can be impacted by lack of control over long bursts of transmissions from the AP or triggered by the AP to the recipient. In IDC scenarios with 802.11 and Bluetooth/UWB, there are certain cases where continuous 802.11 medium availability can be limited to a few milliseconds. For example, depending on the Bluetooth profile, the medium availability for 802.11 could be: 2.5ms every 3.75ms, OR 6.25ms every 7.5ms, OR 8.5ms every 11ms etc. A long receive packet or a burst of RX packets has a high chance of crossing 802.11 medium boundaries and getting curtailed by Bluetooth. This can require the Rx packet duration to be reduced in order to fit the medium availability at 802.11 (outside of Bluetooth slots or any other coexisting device). Coexistence between 802.11 and Bluetooth/UWB/LTE can be handled in customized manner.

Some non-standardized implementations may overload existing functionalities to indirectly control the time duration of the Rx/Tx packet. For Downlink, one can reduce AMPDU aggregation, even turn off AMPDU/AMSDU aggregation altogether or reduce the maximum length in bytes. This can cause suboptimal performance without addressing the actual problem. Even upon turning off aggregation, there may be no means to control the duration of a single MSDU which can be long enough to spill into the desired inactivity period. For Uplink, one can disable triggered mode of operation, which also disables Uplink OFDMA, which can be not desirable. Coexistence between 802.11 and BT/UWB can be improved if there are standardized mechanisms to support coexistence. The same mechanisms can be used to solve other issues of in-device-coexistence such as coexistence between 802.11 and LTE/NR. They can also be used to optimize performance in case of any activity that results in temporary inability to receive/transmit 802.11 frames.

One aspect of the solutions can involves including Channel Quality Indicator (CQI) information into the BA to allow for faster convergence of link adaptation by adjusting modulation schemes and transmit power based on Signal-to-Interference-plus-Noise Ratio (SINR) margins. The feedback reporting depends on the type of frame and specific considerations, with the corresponding identity being inserted by the feedback reporter. Timing of the feedback can occur during SIFS gaps after the PPDU, and error scenarios for reporting feedback are limited. Additionally, the solution allows for delayed BA and flexibility in choosing BA behavior, as well as the inclusion of small PPDUs and composite BA for back-to-back PPDU sequences, improving link adaptation convergence and efficiency. In doing so, the present solution can improve the performance of wireless communication systems in terms of link adaptation, latency, and coexistence with other technologies.

The present solutions can also improve performance in various aspects such as latency-sensitive traffic, multi-link operation, link adaptation, and in-device coexistence via enhancements to the existing AMPDU BA mechanism and Transmission Opportunity (TXOP) structure. For instance, the solution can introduce a Minimum MPDU Start Spacing parameter to address processing constraints and ensure spacing between MPDUs, without wasting transmission resources. For instance, the solution can allow the receiver to control the length of the burst using the schedules to be sent to the sender of the Wi-Fi communications to adjust the timing of the sender based on the encroachment or prolonged bursts of communications by the non-Wi-Fi communications via the shared resources. Another enhancement can include the use of delayed BA, where the recipient indicates its limitations to the originator, and BA transmission is delayed within a negotiated timeframe. The solution can include an enhanced TXOP/PPDU/AMPDU structure to allow for better handling of latency-sensitive traffic and decoding or clear channel assessment (CCA) failures, as well as faster convergence of link adaptation algorithms. The present solution also proposes semi-static and dynamic adjustments of traffic parameters to optimize coexistence with other in-device technologies.

The feedback mechanism in 802.11 can provide objective information about the error status of data units (MPDUs), but there is a potential for improvement to enhance the overall performance of 802.11 devices. This improvement can relate to aspects of 802.11, including link adaptation, latency for latency-sensitive traffic, and coexistence with other technologies like Bluetooth, UWB, LTE, and NR within the same device. By enhancing the feedback mechanism, 802.11 devices can better adapt its transmission parameters based on the wireless channel conditions, optimizing data rates, modulation schemes, and channel coding to maximize throughput and maintain a stable connection. Additionally, improving latency for latency-sensitive traffic can allow for timely delivery of time-critical data, while optimizing coexistence with other technologies can enable seamless operation and interference mitigation, allowing 802.11 devices to efficiently share the wireless spectrum with Bluetooth, UWB, LTE, NR, and other wireless technologies.

The present solution presents enhancements with respect to the feedback to achieve improvements in link adaptation, latency, and in-device coexistence. One aspect of the solution can include performance improvements in latency-sensitive traffic, multi-link operation, link adaptation, and in-device coexistence. Different mechanisms can include enhancements to the existing Aggregated MAC Protocol Data Unit Block Acknowledgment (AMPDU-BA) mechanism and transmission opportunity (TXOP) structure for more efficient multi-link operations, latency reduction, link adaptation, and in-device coexistence. Additionally, adjustments to traffic parameters and TXOP can be considered to optimize in-device coexistence. By implementing these mechanisms, the invention can maximize the efficiency and effectiveness of the feedback system in achieving the desired enhancements in 802.11 networks.

For instance, the present solution can enhance feedback mechanisms to improve link adaptation, latency, and in-device coexistence in 802.11 networks. It can include improvements to existing AMPDU-BA mechanism and TXOP structure, to achieve more efficient multi-link operations, latency reduction, and better handling of hidden nodes. The integration of Channel Quality Indicator (CQI) information into the Block Acknowledgment (BA) allows for faster convergence of link adaptation and enables adjustments in MCS and transmit power based on SINR margins. The feedback reporting can depend on the type of frame and specific considerations, with the corresponding identity being inserted by the feedback reporter. The technical solutions can allow the feedback to be inserted even if all MPDUs are in error. For instance, the technical solution can include self-identification of the receiver even if all MPDUs are in error as the MPDUs can include the receiver address or other information that can allow the sender to improve the communications and avoid IDC issues. The timing of the feedback occurs during SIFS gaps after the PPDU, and the error scenarios for reporting feedback are limited due to timing, reliance on previous exchanges, and additional PHY header information. The solution also allows for delayed BA and flexibility in choosing BA behavior, such as dynamic per-burst selection. Furthermore, the inclusion of small PPDUs and composite BA for back-to-back PPDU sequences enhances link adaptation convergence and efficiency. The originator can indicate the absence of immediate BA and the back-to-back structure in the PHY or MAC header for increased flexibility.

Depending on configurations, the transmitters and the receivers of the communications can be either Wi-Fi 104 or UE 102. For example, both the transmissions (e.g., MPDUs or AMPDUs) as well as feedback (e.g., via BAs) can be provided both by the Wi-Fi AP or by a client device (e.g., STA). For instance, if the Wi-Fi AP 104 is the transmitter of the AMPDUs, the Wi-Fi AP can perform the adjustment based on the feedback received from the client. For example, if the client (e.g., UE 102) is the transmitter of the AMPDUs, the client can perform the adjustment based on feedback received from the Wi-Fi AP.

In some aspects, the present solution relates to enhancements to improve performance in the context of latency sensitive traffic, multi-link operation, link adaptation and in-device-coexistence. The present solution can introduce improvements to existing AMPDU-BA mechanism and TXOP structure for more efficient multi-link operations, latency reduction, link adaptation and in-device-coexistence and adjustment to traffic parameters and TXOP for better in-device coexistence.

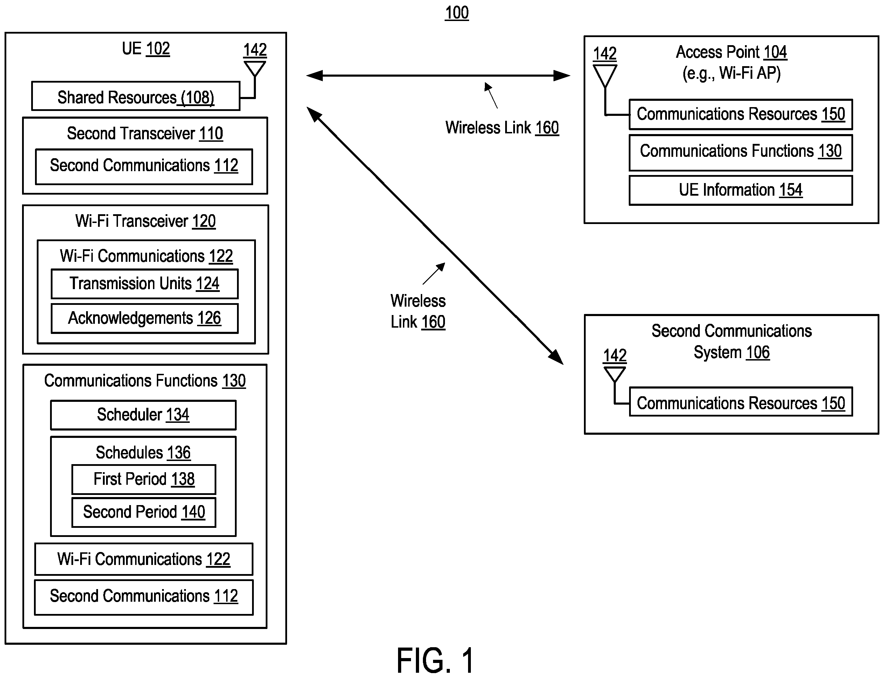

FIG. 1 illustrates an example of a system 100 for providing enhancements of feedback to enhance the performance of link adaptation, latency-sensitive traffic and in-device coexistence. System 100 can include one or more user equipment (UEs) 102 communicating via one or more wireless links 160 with one or more access points (APs) 104 and one or more second communications systems 106. A UE 102 can include one or more shared resources 108 coupled with one or more antennas 142. The UE 102 can include one or more Wi-Fi transceivers 120, communications functions 130 and second transceivers 110. A second transceiver 110 can include or implement one or more second communications 112. A Wi-Fi transceiver 120 can include or implement one or more Wi-Fi communications 122, that can include one or more transmission units 124 and acknowledgements 126. A communications function 130 can include one or more Wi-Fi communications 122 and second communications 112 and schedules 136, which can include one or more first periods 128 and second periods 140 for timing Wi-Fi communications. An AP 104 can include one or more communications resources 150 coupled with one or more antennas 142. The AP 104 can also include one or more communications functions 130 that can utilize one or more schedules 136 and UE information 154 to manage communications with the UEs 102 based on the information received. The second communications system 106 can include one or more communications resources 150 coupled with one or more antennas 142 for wireless communications with the UE 102 via the wireless link 160.

User equipment (UE) 102 can include any combination of hardware and software, such as a device, designed or configured for wireless communications. UE 102 can include any integrated circuitry, processors, memories, controllers, firmware or software, including computer code with instructions and data, for facilitating wireless communications across wireless links 160. UE 102 can be a device comprising one or more hardware or software shared resources 108, antennas 142, transceivers for various types of wireless communications, including Wi-Fi communications 122 that can be implemented using a Wi-Fi transceiver 120, or other wireless communications, such as second communications 112, that can be implemented via a second transceiver 110. UE 102 can include and utilize communications functions 130 to generate, process, and manage Wi-Fi communications 122 and second communications 112 to reduce the occurrence of, or manage and overcome, IDC issues (e.g., overlaps or collisions between different wireless technologies) using the communications function 130 and schedule 136.

Access Point 104 can include any combination of hardware and software for providing or exchanging Wi-Fi communications 122 with UE 102. AP 104 can facilitate communication between UEs 102 and the network infrastructure, which can include one or more other networks (e.g., wired or wireless networks, cellular networks, the internet or similar). AP 104 can include or operate as a transceiver, capable of sending and receiving data packets via communication resources 150. Communication resources 150 of the AP 104 can include any features or functionalities for transmitting or receiving wireless communications, such as antennas 142, transceivers, RF front-end components (e.g., filters, amplifiers and switches), baseband processors or power management circuits. The AP 104 can send and receive Wi-Fi communications 122 via communications resources 150 and its one or more antennas 142. The AP 104 can coordinate the flow of Wi-Fi communications 122 between itself and UE 102 by managing access to the network, assigning IP addresses, and handling security protocols. The AP 104 can include a communications function 130 that can implement the functionality of establishing and utilizing schedules 136 for communications with UE 102 to manage or time wireless communications with the UE 102.

Second communications system 106 can include any combination of hardware and software for communicating second communications 122 with the UE 102. Second communications system 106 can include the infrastructure and technologies used for non-Wi-Fi wireless communications, including components for transmitting and receiving second communications 112 (e.g., the communications resources 150). Communications resources 150, just like in AP 104, can include various wireless communications circuitry, an RF front-end module, a transceiver, and an antenna 142, all of which can facilitate data transmission and reception. The second communications system 106 can facilitate transmissions and receiving of any second communications 112 (e.g., including bursts of communications that can encroach into allocated time for Wi-Fi communications 122), and which can include any variety of non-Wi-Fi technologies such as Bluetooth, UWB, LTE, NR, NR-U and LAA. The second communications system 106 can establish and utilize wireless links 160 with the UE 102.

Wireless links 160 can include any wireless interface or communication pathways established between the UE 102 device, the AP 104 device, and the second communications system 106. Wireless links 160 can facilitate data exchange and connectivity across or including various technologies, such as Wi-Fi communications 122 or second communications 112. Wireless links can facilitate connectivity with the internet access and local networks, including via Wi-Fi, UWB, LTE, NR, NR-U, LAA or other technologies.

While performing Wi-Fi communications 122, either the UE 102 or the AP 104 can act as a transmitter or a receiver. For instance, UEs 102 and APs 104 can each transmit to each other any transmission units 124 (e.g., AMPDUs, PPDUs or low latency packets) and can receive from each other acknowledgements 126 (e.g., BAs for transmitted AMPDUs). For instance, a BA received in response to a PPDU or an AMPDU can be provided if at least one MPDU of the AMPDU has been received correctly. The receiver of the PPDU/AMPDU however can often have more information on the details of various individual MPDU receptions or errors, such as the information on the difference in signal-to-interference-plus noise ratio (SINR) between what was realized in the MPDU and the minimum necessary to support the MCS used in the system or device. The receiver can also be aware of any intermittent interference and its relative strength compared to the signal of interest.

For example, for every string of errors, the recipient can report quantized differences between required SINR and realized SINR if it exceeds a threshold. The transmitter can use this to judge if there was abrupt interference in the middle due to a hidden node or if the channel is weaker in which case MCS can be reduced (or transmit power increased in case). Also, if the realized SINR is higher than the desired SINR, the recipient can report the minimum difference between the realized and actual SINR so that the transmitter can increase the MCS (or lower the transmit power without changing MCS) assuming the minimum realized SINR. In addition, there can be different SINR at different times in the same AMPDU. For example, multiple SINRs can be provided, such as two (e.g., one for baseline and one for +OBSS), optionally presenting 0 1 or 2 values. The number of values could be greater than 2, such as 4, 5 or more.

Shared resources 108 can include any combination of hardware and software of the UE 102 that can be shared or utilized by multiple different wireless technologies, such as Wi-Fi, Bluetooth, UWB Ultra-Wideband (UWB), Long-Term Evolution (LTE), Licensed Assisted Access (LAA), New Radio (NR) or New Radio-Unlicensed (NR-U). Shared resources 108 can include any portion of RF transmission or receiving signal chains for any of these wireless communication protocols or technologies that may be utilized by two more such protocols or technologies. Shared resources 108 can include antenna systems (e.g., antennas 142) as well as any circuitry for operating the antennas. Shared resources 108 can include radio frequency (RF) front-end components, including any filters, amplifiers and switches that can be used to manage different frequency bands or channels used by the Wi-Fi communications 122 or second communications 112. Shared resources 108 can include baseband processors for processing RF signals and power management systems for regulating power usage across transceivers (e.g., 110 or 120)

Wi-Fi transceiver 120 can include any combination of hardware and software for providing or implementing Wi-Fi communications 122. Wi-Fi transceiver in a UE 102 device can include a combined transmitter and receiver unit designed for Wi-Fi wireless communications 122. Wi-Fi transceiver 120 can facilitate the sending and receiving of Wi-Fi communications 122 over Wi-Fi networks by converting digital data into radio signals for transmission and vice versa for reception. Wi-Fi transceiver 120 can include components for managing communication protocols, signal processing, and interaction with wireless access points to provide internet connectivity and data exchange. Wi-Fi transceiver 120 can utilize the shared resources 108 for performing wireless communications.

Second transceiver 110 can include any combination of hardware and software for providing or implementing second communications 112. Second communications 112 can include any wireless communications or wireless data exchange utilizing any non-Wi-Fi technologies or standards, including, for example Bluetooth, UWB, LTE, LAA, NE or NR-U. Second transceiver 110 can manage one or more wireless protocols or standards, including any wireless standards or protocols of Bluetooth, UWB, LTE, LAA, NE or NR-U to allow the UE 102 to facilitate connectivity across diverse networks. A UE 102 can include multiple second transceivers 110 that can be configured for any combination of Bluetooth, UWB, LTE, LAA, NE or NR-U communications. Second transceiver(s) 110 can utilize the shared resources 108 for performing wireless communications.

Wi-Fi communications 122 can include any wireless transmission and reception of data over a local area network (LAN), or any other wireless network, using radio waves. Wi-Fi communications 122 can include wireless communications based on one or more IEEE 802.11 standards. Wi-Fi communications 122 can be implemented via wireless links 160 (e.g., wireless local area network connections) using Wi-Fi access points 104 (e.g., Wi-Fi wireless routers). Wi-Fi communications 122 can include transmission units 124 and acknowledgements 126 that can be organized or configured according to Wi-Fi standards (e.g., 802.11).

Transmission units 124 or frames that can be assembled and utilized according to Wi-Fi communication protocols or standards. For these transmission units can include PPDUs (Physical Protocol Data Units) that can encapsulate one or more MPDUs (MAC Protocol Data Units), acknowledgement messages such as Block Acknowledgments (BAs) to facilitate reliable data delivery.

Wi-Fi communications 122 can include various communication frames. For example, AMPDU (Aggregated MAC Protocol Data Unit), MPDU (MAC Protocol Data Unit), PPDU (Physical Protocol Data Unit), PDU (Protocol Data Unit), and BA (Block Acknowledgment) can be components of wireless communication systems where MPDUs are aggregated into an AMPDU, which is then transmitted as a PPDU, and the reception of these units is confirmed by a BA.

Transmission units 124 can include any packet formats used in Wi-Fi communications 122. Transmission units 124 can include AMPDUs (Aggregated MAC Protocol Data Units), which can combine multiple MPDUs (MAC Protocol Data Units) into a single transmission to reduce overhead and improve throughput. Transmission units 124 can include or utilize PPDUs (Physical Protocol Data Units) that can be physical layer packets that carry the aggregated AMPDUs, including any related headers and trailers. Transmission units 124 can include low latency packets designed for time-sensitive data that is intended for communication with minimal delays. A low latency packet can be any data packet configured to decrease or minimize delay during transmission and reception, such as a data packet including a time sensitive payload configured for higher priority treatment during transmissions. The low latency packet can include any packet to be delivered at a lower latency than average network traffic or that is to be prioritized for transmission over other types of network traffic. For example, in real-time voice communication over VoIP, low latency packets ensure that voice data is transmitted quickly to maintain the quality of the conversation. For example, an AMPDU can include multiple MPDUs for a video stream, while a separate low latency packet could be used for real-time gaming commands. Communications function 130 can combine various transmission units 124 to improve efficiency and reduce or manage IDC issues or overlaps.

Acknowledgements 126 for Wi-Fi transmission units 124 can include any mechanisms for confirming the receipt of data or providing feedback information to facilitate a reliable communication. Acknowledgements 126 can include Block Acknowledgements (BAs), which can acknowledge the receipt of multiple MPDUs within an AMPDU and provide a bitmap of successfully received packets. Acknowledgements 126 can include immediate acknowledgement messages (e.g., ACKs) for single packets or delayed ACKs to accommodate scheduling and reduce IDC issues or collisions. For instance, after transmitting an AMPDU, an AP 104 can receive a BA from UE 102 indicating which MPDUs were received correctly, or it can receive from the UE 102 a delayed BA, which was delayed due to an ongoing IDC issue.

Communications function 130 can include any combination of hardware and software for monitoring Wi-Fi communications 122 and second communications 112 and detecting and managing in-device coexistence (IDC) issues. Communications function 130 can include functionalities to improve IDC performance, reduce time overlaps with respect to shared resources 108 and reduce any communication collisions or instances of dropped or lost network traffic. Communications function 130 can take actions to safeguard that Wi-Fi communications 122 and second communications 112 do not interfere with each other by adjusting (e.g., periodically, dynamically or based on events) their operation times (e.g., schedules 136) and configurations with respect to bands, channels or shared resources 108. For example, if the communications function 130 detects a prolonged Bluetooth transmission (e.g., 112) that is going to disrupt a scheduled or an ongoing Wi-Fi communication 122, communications function 130 can utilize a scheduler 134 to update first and second periods of a schedule 136 in order to reschedule (e.g., postpone) Wi-Fi transmissions to avoid interference, thereby maintaining seamless connectivity and performance across both technologies.

Communications functions 130 can include any combination of hardware and software for controlling, managing and implementing wireless communications, sharing of the resources and improvement of IDC in a UE 102. Communications function 130 can manage timing and transmissions of transmission units 124 (e.g., PPDUs/AMPDUs) and acknowledgements 126 (e.g., BAs). Communications function 130 can modify transmission units 124 (e.g., repackage, rearrange and repackage AMPDUs to include low latency packets) as well as modify acknowledgements 126 (e.g., to include data into BAs). Communications function 130 can detect prolonged transmission bursts that can exceed the allocated time for shared resources and take action to manage IDC issues. Communications function 130 can utilize a scheduler 134 to generate schedules 136 having first period 138 during which Wi-Fi communications 122 can be implemented and second period 140 during which Wi-Fi communications 122 are not to be implemented (e.g., time interval for second communications 112).

The first period 138 can include a burst limit identifying or corresponding to a point at which the Wi-Fi communication is to end for the duration of the periodicity defined by the second period. The burst limit can include any point in time during the first period 138 or at the end of the first period 138. For instance, the burst limit can be a point at the end of the first period 138 at which the Wi-Fi communications (e.g., both the AMPDU transmissions and transmissions of BAs responsive to the AMPDUs) are to be completed within the second period 140. The remaining portion of the second period 140 following the burst limit marking the end of the first period 138, can be used for other (e.g., second or non-Wi-Fi communications). Communications function 130 can include the functionality for managing communications, including coordinating delays in acknowledgements 126 (e.g., BAs) with respect AMPDUs and updating BAs to include data on various failures or errors.

The communications function 130 can transmit or receive, during the first periods 138 of the second periods 140 (e.g., periodically) AMPDU frames with MPDUs collected and arranged to form a size according to the burst limit (e.g., at the end of the first period 138). For instance, the communications function 1300 can transmit or receive, during a next first time period 138 (e.g., a time period 138 of a future or following second period 140), an AMPDU of the Wi-Fi communication 122 that includes a size or that it is sized or configured to fit within this next first time period 138, while also leaving a portion of the first period 138 for the completion of transmission of a block acknowledgement (BA) for this AMPDU within the same next first time period 138.

For instance, communications functions 130 can insert channel quality indicator (CQI) information from a recipient of Wi-Fi communications 122 (e.g., AMPDUs) into the acknowledgements 126 (e.g., BA), which can provide several benefits. For example, inserting information into the acknowledgements 126 (e.g., BA) can facilitate the transmitter to increase the MCS to the minimum supported level if there is a sufficient SINR margin, leading to higher data rates and potentially reduced transmit power. If the SINR is below the threshold for the current MCS, the transmitter can decrease the MCS to the maximum supported level to avoid errors and prevent Contention Window (CW) increase. In Wi-Fi, CW parameter can correspond to the random wait time a device must wait for before it attempts to transmit. CW can be increased whenever there are errors encountered. So, larger the number of errors, larger the wait time and poorer the throughput.

This integration of CQI information facilitates faster convergence of link adaptation. Additionally, the BA can inform the transmitter if a hidden node has started transmitting during a burst or if the TXOP did not begin with an RTS/CTS exchange. In the latter case, if the recipient has virtual Carrier Sense Network Allocation Vector (CS NAV) information, it can be embedded in the BA, allowing the transmitter to make informed decisions about continuing with reduced MCS within the same TXOP or curtailing the TXOP to prevent further errors. Moreover, if interference from a hidden node occurs in the middle of a burst but ends, resulting in error-free MPDUs in the latter part, the transmitter can make decisions about reducing the MCS based on the Packet Error Rate (PER) deduced from the BA. The present solution can include additional information regarding the possible reason of failure such as a sharp change in SINR in the middle of the AMPDU rather than a small one. Based on such information, the transmitter can conclude if the failure is due to a hidden node or due to general channel doppler.

For example, the communications functions 130 can include in the acknowledgements 126 (e.g., BAs) information regarding SINR margins. If the realized SINR is higher than the SINR threshold for a given MCS for a set of MPDUs, a quantized value representing the minimum difference between the realized and required SINR can be reported. This information can allow the transmitter to increase the MCS or potentially reduce the transmit power. In case of a sequence of errors where the realized SINR falls below the SINR for the given MCS, a quantized value indicating the difference between the required SINR and the realized SINR can be provided. The transmitter can use this information to infer the presence of a hidden node or make adjustments such as reducing the MCS or increasing the transmit power. In a generalized form, for each string of MPDUs with realized SINR values falling within a specific threshold, the quantized difference between the realized and required SINR can be reported in the order of their occurrence. This reporting mechanism allows for the potential inclusion of one or more such values in the BA.

Communications function 130 can insert information about MPDU transmission failures or errors even when all MPDUs of an AMPDU have failed. For instance, sometimes the BA mechanism can include at least one MPDU of the AMPDU being received correctly for any ACK to be transmitted by the recipient. However, there are occasions where the recipient is able to decode the long training sequence (L-SIG) or other parts of the physical layer (PHY) header correctly even though all the MPDUs are in error. Providing an acknowledgement 126 even if all MPDUs at a certain MCS are in error can help with respect to exchanging information to achieve better link adaptation, power control or handling of hidden nodes and retain the ownership of the medium with proper MCS adjustment. Such an acknowledgement can be enabled by either allowing an ACK for the PHY header itself (given the L-SIG and hence, the end-time of the PPDU is known, SIFS after which the ACK can be transmitted). Additional fidelity regarding the end time of the PPDU can be achieved if it can be indicated in new fields of the ultra-high rate (UHR) header using lower MCS (in addition to the indication in L-SIG/RL-SIG. Sending acknowledgement even if all MPDUS are in error can be implemented for UHR transmitters and recipients. Such information can be included in the UHR PHY header so as to reliably identify the transmitter/recipient.

The communications function 130 can implement an informed delayed BA mechanism. For instance, a communications function 130 of an AMPDU recipient can indicate its limitations to AMPDU originator, including maximum MPDU count, maximum byte count, maximum duration of the AMPDU to be able to transmit BA at SIFS, minimum delay, maximum delay for BA transmission and in device-coexistence issues if they exist. The communications function 130 of the AMPDU originator can allow for delayed BA response, such as if the AMPDU originator follows the recipient's limitations, e.g., transmits AMPDUs which fall below the RX-TX delay limits, and recipient has not signaled that coexistence issues are present. AMPDU originator can interpret lack of BA at SIFS as failure. Otherwise, AMPDU originator can interpret lack of BA as delayed BA.

Communications function 130 can manage or implement any timing or content related adjustments with respect to any transmission units 124 or acknowledgements 126. Reporting of the feedback when all MPDUs are in error can depend on the type of frame and specific considerations. For example, for downlink single-user (DL SU) frames, the feedback can be reported based on the recipient of the previous exchange within the Transmission Opportunity (TXOP) or any explicit indication in the Ultra High Rate (UHR) header regarding the addressees. For downlink multi-user (DL MU) frames, the feedback reporting can rely on indications in the UHR header regarding the addressees. In the case of Unlink Single-User (UL SU) frames that were not preceded by a trigger, the feedback reporter can be determined based on the recipient of the previous exchange within the TXOP or explicit indications in the UHR header regarding the addressee. For UL SU frames preceded by a trigger, the Access Point (AP) that transmitted the trigger or indications in the UHR header regarding the addressee can determine the feedback reporter. Lastly, for UL MU frames, can be preceded by a trigger, the AP that transmitted the trigger or indications in the UHR header regarding the addressee can be responsible for reporting the feedback. The feedback reporter inserts the corresponding identity in the feedback accordingly.

The communications functions 130 can manage the timing of any acknowledgements 126 or feedback. The recipient of the feedback can be omitted from reported feedback, as the entity that transmitted the preceding PPDU can be aware and can identify that the feedback is intended for itself based on the identity inserted in the feedback. The timing of the feedback report can occur during SIFS gaps after the end of the PPDU, deduced from the Long Training Sequence (L-SIG) or Reverse Long Training Sequence (RL-SIG) and other parts of the Physical Layer (PHY) header. Due to the timing of the response, reliance on previous exchanges and additional PHY header information, the error scenarios for reporting feedback can be limited.

Communications function 130 can facilitate transmissions of multiple AMPDUs with only a single BA in response. For example, the originator device or system may not desire BA after SIFS as the originator can intend to send sequence of AMPDUs (with no gaps or SIFS gap) in order to perform MCS exploration for link adaptation, improving decoding/CCA. In such examples, the originator can indicate a provision/desire for delayed BA to a recipient that indicates such capability (e.g., indication in PHY header or MAC header). This can provide a higher flexibility than setting Ack Policy = Block Ack (within the HT-immediate context), as the latter provision can mean that none of the AMPDUs can be acknowledged with an immediate BA and have to be instead acknowledged with a BAR-SIFS-BA combination.

For example, the communications function 130 of the originator can transmit transmission units 124 again after SIFS gap or even without any gap. The originator can elicit an acknowledgement 126 (e.g., BA) later, such as by using Implicit BAR / Explicit BAR and optionally allow the recipient to initiate BA transmission e.g., within the recipient's own TXOP. In some examples, the difference between the existing delayed BA procedures and the present solution is that the solution allows dynamic per-burst behavior regarding the choice of BA (i.e., whether immediate or delayed) while the existing procedure forces the BA for every burst to be either immediate or be a delayed BA, depending on the BA agreement setup.

Communications functions 130 can provide or facilitate sizing of the PPDUs for improved efficiencies. For example, a short PPDU could precede a longer PPDU with either SIFS gap or no gap in between. Inserting SIFS+BA+SIFS between the two AMPDUs can be avoided. It might also cause a problem with synchronous MLD receivers. It can be helpful to have a flexibility to insert a small PPDU in the beginning after which the PPDU with desired final length and contents can occur. Such implementations can facilitate an improved link adaptation convergence. For example, convergence of the link adaptation algorithm can be made faster if composite feedback can be obtained for a back-to-back PPDU (AMPDU) sequence with multiple MCSs/NSSs. The transmitter can pack back-to-back PPDUs each with a different MCS/NSS combination without any gap or with SIFS gap. At the end of the burst, a composite BA can be elicited which can help the transmitter know which MCS/NSS combination was the most successful. Not having an intermediate BA (and SIFS) can help increase efficiency. In some link adaptation algorithms, multiple iterations can be used to get the correct MCS after one AMPDU because BA can only give information regarding the success/failure rate of an MCS and none regarding the margins. In the absence of such enhanced BA, many iterations of AMPDU-BA may be needed to arrive at the optimal MCS/NSS. The originator can indicate the absence of immediate BA and the back-to-back structure dynamically in the PHY or MAC header. This can provide a higher flexibility than setting Ack Policy = Block Ack (within the HT-immediate context), as the latter provision means that none of the AMPDUs can be acknowledged with an immediate BA and have to be instead acknowledged with a BAR-SIFS-BA combination.

If the communication functions 130 of the AMPDU originator interprets lack of BA as delayed BA, it can assume that the missing BA will be transmitted by the recipient after a negotiated minimum delay X and before a maximum delay Y, either using contention OR triggered by a BAR. The expiry of maximum delay can lead to the assumption at the originator that the AMPDU is in error. It can continue with its TXOP (i.e., after PIFS) transmitting the next PPDU to same recipient or other recipient(s).

The communications function 130 of the AMPDU recipient can sometimes exercise delayed BA. For instance, if the recipient transmits BA within SIFS, the BA can indicate the last processed sequence number of the AMPDU (<=last sequence number in the AMPDU). Else when transmitted, the BA can be cumulative in terms of ACK information e.g., if additional AMPDUs arrive before BA is transmitted.

The communications function 130 of the originator may not desire BA after SIFS as it can intend to send sequence of AMPDUs (with no gaps or SIFS gap), for example, for handling latency sensitive traffic, MCS exploration for link adaptation, improving decoding/CCA. Also, there can be known recipient limitations vs AMPDU contents, such as, AMPDU exceeding recipient maximum byte count. In this case, the originator can indicate a provision/desire for delayed BA (to a recipient that indicates capability). For example, there can be an indication in PHY header or MAC header. After signaling, the originator can be free to transmit again after SIFS or even without any gap. The originator can elicit a BA later e.g., when using Implicit BAR / Explicit BAR. Optionally, it can allow the recipient to initiate BA transmission e.g., within the recipient's own TXOP.

The communication function 130 can facilitate enhanced TXOP/PPDU/AMPDU structure. For example, a short PPDU (AMPDU) could precede a longer PPDU (AMPDU) with either SIFS gap or no gap in between. Inserting SIFS+BA+SIFS between the two AMPDUs can lead to wastage. It might also cause a problem with synchronous MLD receivers. It can help if there is flexibility to insert a small PPDU in the beginning after which the PPDU with desired final length and contents can occur. Advantages of the present solution can include a time margin for the AMPDU originator to build/rebuild AMPDUs based on the link that wins channel access and the bandwidth with which it wins channel access or while waiting to decode length information for the purpose of alignment. An option for the AMPDU originator to react to asynchronous events on the multiple links of the MLD. So, the MLD could tentatively use a small PPDU at the beginning of link 1 transmission and follow it up with a larger PPDU depending on the ACK status on link 2.

The communication function 130 (e.g., of a UE 102 device) can detect a burst of communications (e.g., 112) received by the second wireless transceiver 110 that exceeds a time period allocated for second wireless communications 112. The UE 102 device can be communication with an AP 104 to receive Wi-Fi communications 122. For instance, the UE 102 can be configured and scheduled to receive Wi-Fi transmissions 122 during the time interval into which the burst of communications from a second communications system 106 has exceeded or encroached. For example, the communication function 130 can detect that the second burst of communications received by the second wireless transceiver 110 overlaps with a portion of the first time period allocated to receive Wi-Fi communications 122 from the AP 104 according to a predetermined schedule 136. The communication function 130 can utilize the scheduler 134 to adjust the schedule 136, responsive to the overlap. Such an updated schedule 136 can be transmitted to the AP 104 for the AP 104 to use to avoid conflicting or overlapping with the second burst of communications (e.g., 112) at the UE 102.

For example, the communications function 130 can receive an AMPDU of the Wi-Fi communication 122. The AMPDU can be received during a next first time period of a periodic schedule 136 that includes a first period 138 for receiving Wi-Fi communications 122 within a second period 140 creating the periodicity. The AMPDU can include a size adjusted according to the next first time period. For example, the communications function 130 can determine the amount of a remaining portion of the first period 138 and generate an AMPDU to fit that remaining portion of the first period 138 without exceeding it. In doing so, the communications function 130 can improve the throughput and the data rate by maximizing the use of the amount of the first period 138 dedicated to Wi-Fi communications 122. The sender (e.g., AP 104 or UE 102) can insert such a sized AMPDU in the upcoming first period 138 (e.g., in the next first time period 138). For example, the communications function 130 can receive, during the next first time period, an AMPDU of the Wi-Fi communication 122 that includes a size that is established or configured (e.g., maximized, such that it is formed using a maximized number of packets) to fit within the next first time period and allow for a completion of transmission of a block acknowledgement (BA) of the AMPDU within the next first time period.

The communications function 130 can detect that a second burst of communications (e.g., 112) received by the second wireless transceiver 110 overlaps with a portion of the first time period 138 allocated to receive Wi-Fi communications 122 from the AP 104 according to the schedule 136. The communications function 130 can utilize the scheduler 134 to adjust the schedule 136, responsive to the overlap. For example, the communications function 130 can adjust the timing of the start of the first period 138 to avoid interference or overlap with the second burst. The updated schedule 136 can be transmitted to the AP 104 so that the communications function 130 of the AP 104 can manage the Wi-Fi communications 122 to the UE 102 so that the transmissions from the AP 104 do not conflict with the second burst of communications received via the shared resources 108 of the UE 102. The communications function 130 can receive an AMPDU of the Wi-Fi communication 122 from a sender, generate a block acknowledgement (BA) for the AMPDU and then communicate the schedule to the sender (e.g., AP 104 or UE 102) via the BA (e.g., 126).

The communications function 130 can detect a second burst of communications 112 received by the second transceiver 110 exceeding a second time period allocated for second wireless communications 112. The communications function 130 can determine, responsive to the detection of the second burst of communications, a second schedule 136. The AP 104 can transmit Wi-Fi communications 122 to the UE 102 device via a second channel of the plurality of channels of the wireless link 160 according to the second schedule. The second schedule can include a second burst limit of a third time period on a second periodic basis of a fourth time period. The communications function 130 can communicate the second schedule to the access point.

Communication functions 130 of the AP 104 can modify the treatment of AMDPU transmissions in response to information from the UE 102 (e.g., via acknowledgements 126) indicative of existence of IDC issues (e.g., overlaps or conflicts). For instance, an AP 104 can have a communications function 130 that can be implemented using the one or more processors coupled with memory. The communications function 130 can receive, from a UE 102 device, a block acknowledgement (BA) (e.g., 126). The BA can include information identifying existence of an in device-coexistence issue on the device. The IDC can include, for example, a detected event of encroachment of second communications 112 (e.g., burst of communications received from the second communications system 106) via the shared resources 108, including the antenna 142). The communications function 130 can determine, responsive to identifying the in device-coexistence issue, to allow one or more BAs (e.g., 126) from the UE 102 device responsive to one or more AMPDUs from the AP 104 to be delayed past a SIFS. The communications function 130 can determine to allow the one or more BAs (e.g., 126) to be late without being identified as a failure (e.g., without identifying the AMPDU transmissions as failed, incomplete or dropped transmissions).

The communications function 130 can receive, after the SIFS and responsive to the determination, a second BA from the UE 102 device. The second BA (e.g., 126) can include a plurality of acknowledgements (e.g., BAs) corresponding to a plurality of AMPDUs received from the AP. For instance, following the determination by the communications function 130 to not mark or identify the transmitted AMPDUs as failed transmissions despite the late, or at that time missing BAs (e.g., acknowledgements 126), the communications function 130 can receive the BAs for those missing or late AMPDUs following the time threshold (e.g., expected BA time threshold). The communications function 130 can determine, responsive to the determination, that a plurality of transmissions for the plurality of AMPDUs are successful regardless of the second BA received after the SIFS.

When a communications function 130 receives the information (e.g., via a BA) that a UE 102 is going to be late with transmissions of the BAs to previously transmitted AMPDUs, the communications function 130 can determine to service other UE 102 instead. For example, the communications function 130 can receive, from a second UE 102 device, a block acknowledgement (BA) comprising information not identifying an in device-coexistence issue on the second device. The communications function 130 can transmit, to a second UE 102 device, an AMPDU (e.g., 122). The communications function 130 can determine to implement this transmission to the second UE 102 in response to determining that the (first) UE 102 is delaying its BA transmissions. The communications function 130 can determine that a BA for the AMPDU is not received within the SIFS. The communications function 130 can identify that the transmission of the AMPDU has failed responsive to the BA not being received within the SIFS.

The communications function 130 can identify that the device is configured for Wi-Fi communication in which transmission of one or more BAs for the one or more AMPDUs is delayed until after one or more SIFSs following the one or more AMPDUs. The communications function 130 can transmit, responsive to the configuration, a provision to communicate the plurality of AMPDUs according to the configuration. The provision can be indicated in at least one of a header of a physical layer or a header of a medium access control header of an AMPDU of the plurality of AMPDUs.

The communications function 130 of the receiver of the BA can identify, from the information (e.g., inserted into a BA by a sender's communications function 130) a channel quality information indicating a signal-to-interference-plus-noise ratio (SINR) margin. The communications function 130 of the receiver can adjust, responsive to the SINR margin, a modulation and coding scheme (MCS) for transmissions to the device. The communications function 130 of the receiver of the BA can identify, from the information in the BA, an indication corresponding to at least one of: a modulation and coding scheme (MCS) for transmissions to the device, a signal strength of the one or more AMPDUs or presence of one or more hidden node. The communications function 130 of the receiver of the BA can adjust, responsive to the indication, for a next AMPDU to be transmitted to the device, at least one of: the MCS, the signal strength, or transmission power corresponding to the one or more hidden nodes. The communications function 130 of the receiver of the BA can determine, from the information received via the BA that was edited or adjusted by the communication function 130 of the sender, that all of the MPDUs within the one or more AMPDUs failed to be received by the device.

The communications function 130 can identify a low latency packet received by the UE 102 device during a current TXOP. The low latency packet can be determined to be communicated to the AP 104. The communications function 130 can identify a physical protocol data unit (PPDU) created and waiting to be transmitted to the AP 104 during the current TXOP. The communications function 130 can insert the low latency packet into the PPDU. The communications function 130 can transmit the PPDU comprising the low latency packet to the AP within the current TXOP. The communications function 130 can identify the low latency packet within a second PPDU scheduled for transmission via a next TXOP following the current TXOP and determine to insert the low latency packet into the PPDU.

Scheduler 134 can include any combination of hardware and software for generating schedules 136 that allocate specific time periods for different types of wireless communications. Scheduler 134 can include the functionality for generating first periods 138 and second periods 140 to facilitate improved IDC and minimize IDC issues, overlaps or network collisions that can cause network packets to be lost or dropped. Scheduler 134 can generate schedules 136 that can define, identify or set first periods 138 and second periods 140, any periodicity or repetition of time intervals and any changes to the schedules 136. Schedules 136 can include a first period 138, during which the scheduler informs the Wi-Fi access point (AP) 104 of the available time for Wi-Fi communications 122, and a second period 140, designated for other communications such as Bluetooth or LTE. For example, the scheduler 134 can generate a schedule 136 with a second period 140 that repeats every 20 milliseconds, within which a 5-millisecond first period 138 can be allocated for Wi-Fi communications 122, while the remaining 15 milliseconds of the second period 140 can be allocated for other wireless communications, such as Bluetooth or LTE.

Schedules 136 generated by scheduler 134 can include any organized time intervals or structured plans that allocate specific time intervals for specific wireless communications to facilitate IDC with respect to the shared resources 108 within a UE 102. Schedules 136 can include a first period 138 which can identify a time interval dedicated for Wi-Fi communications 122 (e.g., transmissions of transmission units 124 from Wi-Fi AP 104 and acknowledgements 126 from the UE 102). The Wi-Fi AP 104 can utilize schedule 136 to synchronize or time when to transmit transmission units 124 (e.g., AMPDUs, low latency packets) to the UE 102 and when to expect the acknowledgements 126 (e.g., BAs) to be received. Schedules can include periodic time intervals. The periodic time intervals can be defined by the second period 140 that includes the first period 138. The periodic time intervals can be defined by durations of the concatenated first period 138 and the second period 140, where first period 138 corresponds to Wi-Fi communications time interval and the second period 140 corresponds to second communications time interval.

The scheduler 134 can update the schedules 136 or generate new schedules 136, based on IDC events or issues. For instance, a communications function 130 can generate a burst limit responsive to a detected burst of communications (e.g., 112). For instance, the communications function 130 can determine, responsive to the detection of a burst of communications received by the second wireless transceiver 110 exceeding a time period allocated for second wireless communications 112, a schedule 136 for the AP 104 to transmit Wi-Fi communications 122 to the UE 102 device. The schedule 136 can include a burst limit of a first time period 138 on a periodic basis of a second time period 140. The communications function 130 can receive the schedule 136 from the scheduler 134 and use a Wi-Fi transceiver 120 to communicate the schedule to the access point.

The first time period 138 can be allocated, by the scheduler 134, for receiving the Wi-Fi transmissions 122. The second time period 140 can correspond to a time duration between a start of the first time period 138 and a start of a next first time period 138 on the periodic basis of the second time period 140. The next first time period 138 can be a first time period 138 of the next period of the plurality of periods comprised of a plurality of concatenated second periods 140 time lengths. The next first time period 138 can be allocated for receiving any future Wi-Fi communications 122.

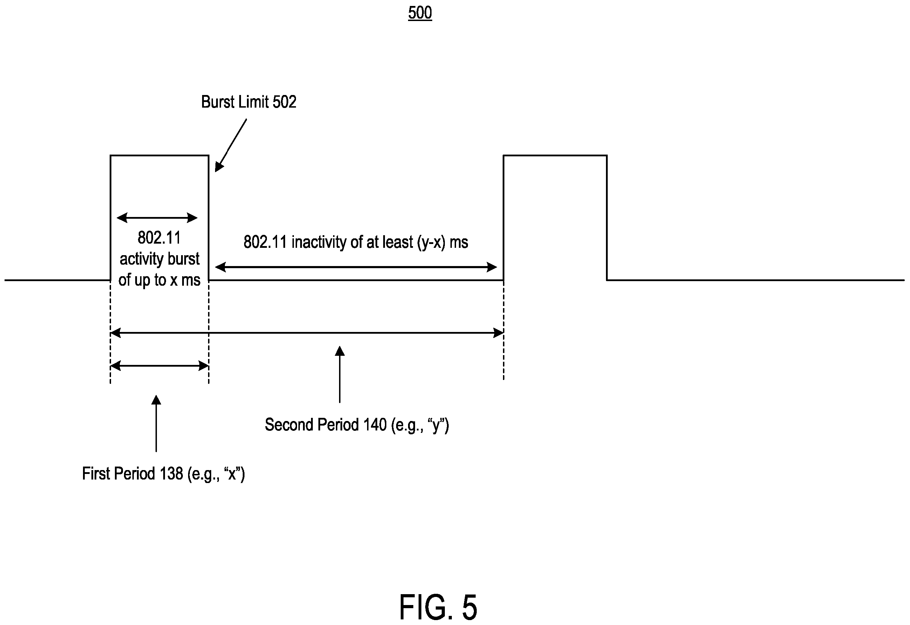

The first period 138 can include, mark or indicate a burst limit 502, such as the one shown in FIG. 5. The burst limit 502 can include a limit of time up to which Wi-Fi communications 122 can be communicated within the second time period. The burst limit 502 can mark the end of the first time period 138 and beginning of the remaining portion of the second time period 140 within which Wi-Fi communications are not to be exchanged. The burst limit 502 can be established with reference to the start of at least one of the first time period 138 or the second time period 140. The burst limit 502 can mark the time duration or interval that is allocated to Wi-Fi communications within the periodicity.

The scheduler 134 can adjust the schedule responsive to a detected overlap between the second communications 112 and the Wi-Fi communications 122 with respect to shared resources 108. For instance, the scheduler can detect (e.g., via communications function 130) that a second burst of communications received by the second wireless transceiver overlaps with a portion of the first time period allocated to receive Wi-Fi communications from the AP according to the schedule. The scheduler 134 can update the schedule 136 or generate a new schedule 136 for receiving the Wi-Fi communications 122 via a first communication channel of a plurality of communication channels. The scheduler 134 can generate a schedule 136 for receiving Wi-Fi communications 122 via a particular communication band of a plurality of communication bands (e.g., of the Wi-Fi). The schedule 136 can be adjusted to change at least one of a duration of the first time period 138 or a duration of the second time period 140 according to a duration of the second burst of communications.

The second period 140 can include the first period 138 and define the overall timing, including the periodicity or repeated intervals, to facilitate synchronized communications between the Wi-Fi AP 104 and the UE 102. The second period 140 can include a time interval that includes a portion of the time interval during which Wi-Fi communications 124 are allowed (e.g., first period 138). The second period 140 can include a portion of the time interval during which Wi-Fi communications 124 are not allowed, such as a remainder of the second period 140 aside from the first period 138 time interval. For example, the second period 140 can include or correspond to a time interval during which Wi-Fi communications 122 are not allowed (e.g., time allocated for second communications 112 at the UE 102). For instance, the scheduler 134 can provide a schedule that defines a second period 140 that repeats every 10 milliseconds, within which a 4-millisecond first period 138 is allocated for Wi-Fi communications 122 and the remainder of the second period 140 (e.g., 6-milliseconds) are not used for Wi-Fi communications 122. This approach ensures that the Wi-Fi transceiver 120 and other wireless transceivers do not interfere with each other, maintaining efficient and effective use of the device's shared resources.

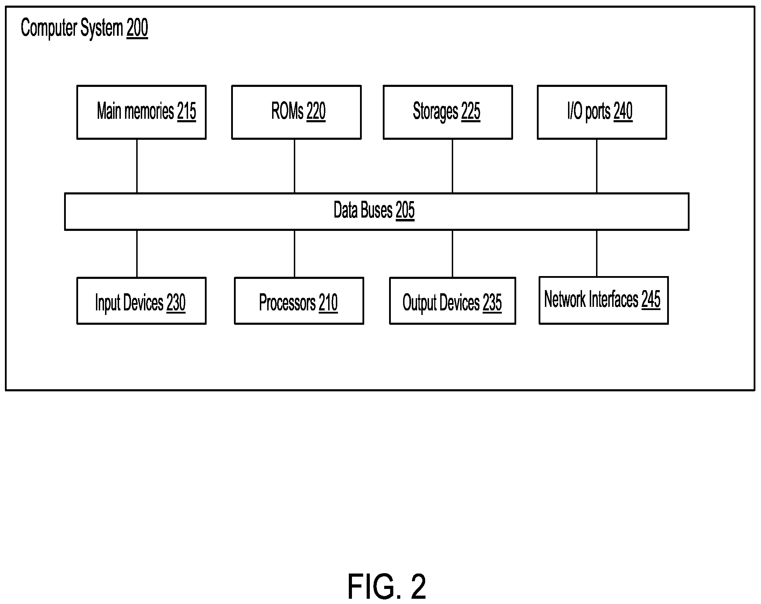

FIG. 2 illustrates a block diagram of an example computer system 200, which can also be referred to as a computing system 200. Computer system 200 can include or be used to implement any computation or processing of system 100 (e.g., command, protocol or data processing) described herein. Computer system 200 can be included in and run any device or system discussed herein (e.g., UE 102, AP 104 or second communications system 106). Computer system 200 can be used for operating, implementing or communicating communications 112 or 122 as well as functionalities of a communications function 130 on any device or a platform (e.g., user's mobile device, server, virtual server, cloud infrastructure or any other system or service).

Computing system 200 can include at least one bus data bus 205 or other communication component for communicating information and at least one processor 210 or processing circuit coupled to the data bus 205 for processing information. Computing system 200 can include one or more processors 210 or processing circuits coupled to the data bus 205 for exchanging or processing data or information. Computing system 200 can include one or more main memories 215, such as a random-access memory (RAM), dynamic RAM (DRAM) or other dynamic storage device, which can be coupled to the data bus 205 for storing information and instructions to be executed by the processor(s) 210. Main memory 215 can be used for storing information (e.g., data, computer code, commands or instructions) during execution of instructions by the processor(s) 210.

Computing system 200 can include one or more read only memories (ROMs) 220 or other static storage device coupled to the bus 205 for storing static information and instructions for the processor(s) 210. Storage 225 can include any storage device, such as a solid-state device, magnetic disk or optical disk, which can be coupled to the data bus 205 to persistently store information and instructions.

Computing system 200 may be coupled via the data bus 205 to one or more output devices 235, such as speakers or displays (e.g., liquid crystal display or active-matrix display) for displaying or providing information to a user. Input devices 230, such as keyboards, touch screens or voice interfaces, can be coupled to the data bus 205 for communicating information and commands to the processor(s) 210. Input device 230 can include, for example, a touch screen display (e.g., output device 235). Input device 230 can include a cursor control, such as a mouse, a trackball, or cursor direction keys, for communicating direction information and command selections to the processor(s) 210 for controlling cursor movement on a display.

Computer system 200 can include input/output ports 240, also referred to as I/O ports 240, can include physical interfaces that facilitate or provide communication between external or peripheral devices and processor(s) 210 and/or memory 215. I/O ports 240 can be connected to data bus 205, allowing the transfer of data between the processor(s) 210, memories 215, and any external devices (e.g., keyboards, mice, printers, and external storage devices). Computer system 200 can also include one or more network interfaces 245 coupled via data buses 205. Network interfaces 245 can include any physical or virtual components enabling communication between the computer system 200 and any external networks (e.g., the Internet). Network interface 245 can provide transfer of data between the processor(s) 210, memories 215 and any external networks.

The processes, systems and methods described herein can be implemented by the computing system 200 in response to the processor 210 executing an arrangement of instructions contained in main memory 215. Such instructions can be read into main memory 215 from another computer-readable medium, such as the storage device 225. Execution of the arrangement of instructions contained in main memory 215 causes the computing system 200 to perform the illustrative processes described herein. One or more processors 210 in a multi-processing arrangement may also be employed to execute the instructions contained in main memory 215. Hard-wired circuitry can be used in place of or in combination with software instructions together with the systems and methods described herein. Systems and methods described herein are not limited to any specific combination of hardware circuitry and software.

Although an example computing system has been described in FIG. 2, the subject matter including the operations described in this specification can be implemented in other types of digital electronic circuitry, or in computer software, firmware, or hardware, including the structures disclosed in this specification and their structural equivalents, or in combinations of one or more of them.

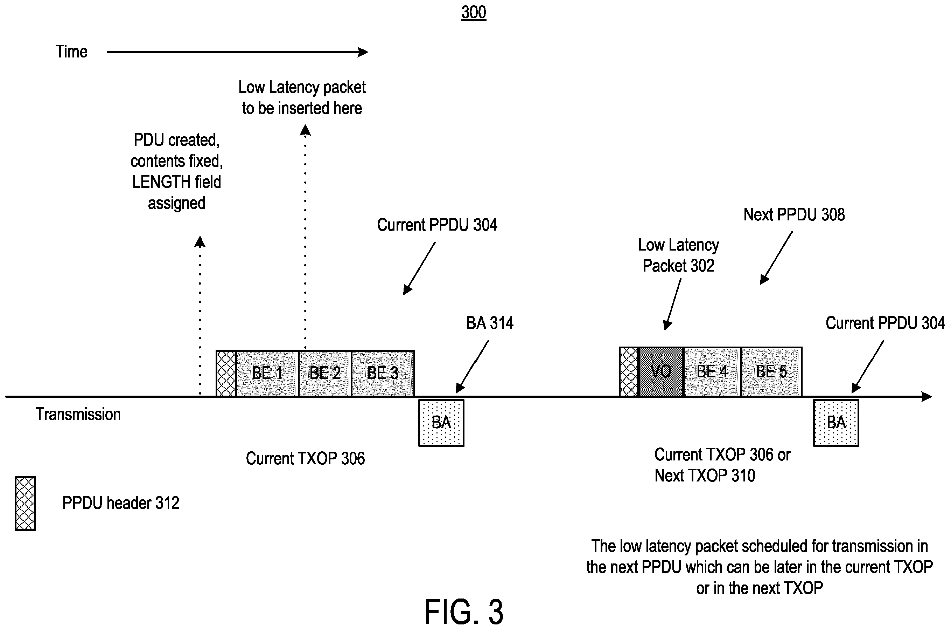

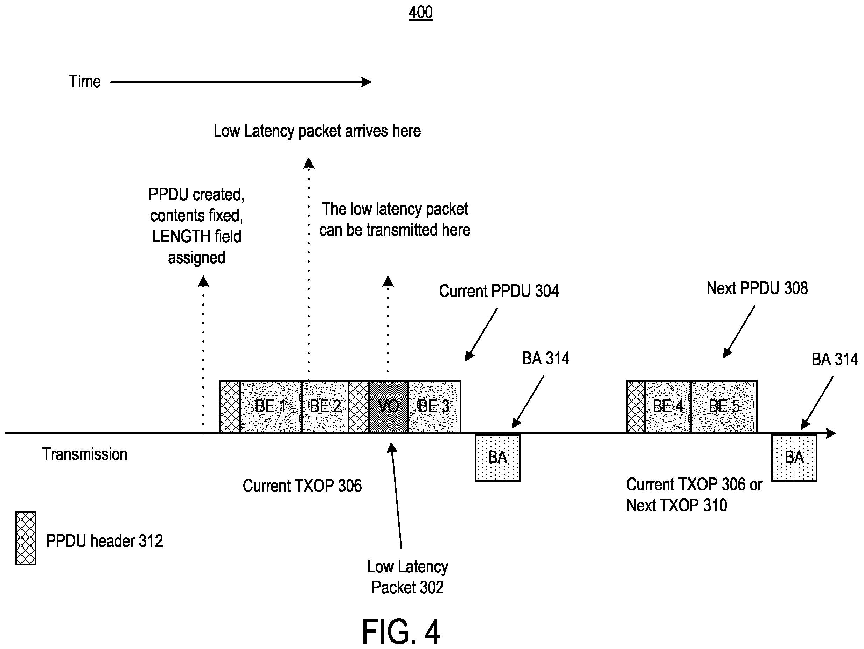

FIGS. 3 and 4 illustrate example plots 300 and 400 showing a low latency packet 302 originally prepared or intended for transmission in a next PPDU 308 or next TXOP 310 being inserted into a preceding or current PPDU 304 that is scheduled for transmission in the current TXOP 306. In example 300 of FIG. 3, a PDU/PPDU 304 can be created or intended for transmission in the current TXOP 306 and can include its own network packets. Each PPDU can include a PPDU header 312 that can include information about its contents and can be organized as AMPDU with multiple MPDUs. For instance, the low latency packet can be a part of a MPDU of a next PPDU 308 which can correspond to the next AMPDU and which can be inserted into the AMPDU of the current PPDU 304 (e.g., along with any relevant data, such as a portion of PPDU header 312 of the next PPDU 308 pertaining to the low latency packet). Following the PPDU 304 or PPDU 308 can be a BA 314 corresponding to the given PPDU, which can be transmitted in response by the receiver.

FIG. 3 also shows a next PPDU 308 that can be scheduled for transmission following the current PPDU 304. The next PPDU 308 can be scheduled for transmission in the current TXOP 306 or in a next TXOP 310. The next PDU 308 can include a low latency packet 302 which is scheduled or intended to be transmitted with the next PPDU 308, for example, in the next TXOP 310. The technical solutions however provide an enhanced TXOP/PPDU/AMPDU structure in which the low latency packet 302 can be taken out of the next PPDU 308 and inserted into the current TXOP 306. This can be done, by the communications function 130, in response to a determination that the packet in the next PPDU 308 is a low latency packet and that there is a space, time or opportunity to include that low latency packet into the current PPDU 304, as shown in example 400 of the FIG. 4. When inserting the low latency packet, a PPDU header 312 of the next PPDU 308 can be included with the low latency packet to provide at least a portion of PPDU header 312 information about the low latency packet within the current PPDU 304.

FIGS. 3 and 4 show a technique for handling latency-sensitive traffic allowing transmission of multiple PPDUs with SIFS gap or no gap in between. This technique can help better prioritize latency sensitive traffic and reduce latency (e.g., by improving the transmission rate and throughput). For example, this technique can allow for the insertion of latency sensitive traffic in an ongoing transmission or preceding PDUs, rather than wait for the end of the ongoing transmission burst/TXOP. When low-latency packets are anticipated, long PPDUs in a TXOP can be broken into a sequence of shorter PPDUs to allow insertion of low latency traffic.

The present solution can include decoding of clear channel assessment (CCA) failure for long AMPDUs/PPDUs. For example, such problems can be alleviated if instead of a long PPDU, a sequence of shorter back-to-back PPDUs without gaps or with SIFS gap can be transmitted followed by a single composite BA. Even if any intermediate PPDUs are in error, the remaining ones can be decoded. This can result in better throughput at the receiver in case of fading/dynamic channels. This can also help collision avoidance through preamble detection such as in case of blindness in NSTR/EMLSR ML devices, since such a device can get to decode multiple preambles instead of only one for the same amount of data transmission and without the overhead of repeated SIFS+BA.

The convergence of the link adaptation algorithm can be made faster if composite feedback can be obtained for a back-to-back PPDU (AMPDU) sequence with multiple MCSs/NSSs. The transmitter can pack back-to-back PPDUs each with a different MCS/NSS combination without any gap or with SIFS gap. At the end of the burst, a composite BA is elicited which helps the transmitter know which MCS/NSS combination was the most successful. Not having intermediate BA (and SIFS) can help increase efficiency. Flexibility for NSTR ML recipients can avoid UL transmission from the recipient that may cause destructive interference to recipient's ongoing reception on another link, the originator can perform consecutive DL transmissions to multiple recipients and then trigger BA in an MU fashion.

The present solution can relate to a semi-static adjustment of traffic parameters without re-association. It can be desirable to have a semi-static limit on the time duration of a burst to/from the concerned non-AP irrespective of the number of bytes or the extent of MSDU/MPDU aggregation. A new action frame can be defined for semi-statically changing the Downlink burst duration that can be supported by the non-AP in a coexistence environment. Similar procedure can also be used to semi-statically adjust the duration limit for triggered Uplink. This can reduce or eliminate the need to disable triggered uplink altogether. In addition to Downlink/Uplink burst duration, it may also be beneficial to indicate the desired periodicity of Downlink/Uplink activity. For example, a non-AP can have a burst duration of up to x ms in every y ms so that at least (y-x) ms is available every y ms for non-802.11 operations. The supported burst parameter can be per-link/per-channel/per-band basis, as each link/channel/band can have different in-device coexistence issues (with respect to different technologies like BT/UWB/LTE/LAA/NR/NR-U).

FIG. 5 illustrates an example of a transmission plot 500 according to a negotiated burst limit 502 for burst communications (e.g., in large AMPDU transmissions). The burst limit 502 for burst communications can be defined by a set time duration, such as x ms (e.g., first period 138) and every periodic time length, such as y ms (e.g., second period 140), as shown in example 500. The plot 500 can show a burst of activity of up to an amount "x" of milliseconds (e.g., duration of first period 138), followed by an inactivity of (y-x) milliseconds (e.g., a portion of second period 140 following the end of the first period 138). The burst limit 502 as well as the first period 138 and the second period 140 of plot 500 can be represented as, included in, or correspond to, a schedule 136.

The present solution can relate to a dynamic adjustment of burst duration. The device with an IDC constraint or issues can dynamically request to reduce the remaining burst duration. The remaining burst duration can be indicated through CTS or BA in response to a Downlink transmission. In CTS example, the initial TXOP duration is contained in the RTS and the responder that has an IDC constraint suggests how much of remaining TXOP duration it prefers resulting in dynamic reduction of the TXOP. In BA example, the transmission can start with a shorter DL burst and, in the BA, the responder suggests the remaining TXOP duration. The remaining burst duration can be indicated in an Uplink packet transmitted in response to a trigger frame. The remaining burst duration can be used either for Downlink transmission to this device or Uplink transmissions from this device that is facing an IDC constraint. It may also be beneficial to indicate the desired inactivity time after completion of the current burst. This can also serve as a notice of absence.

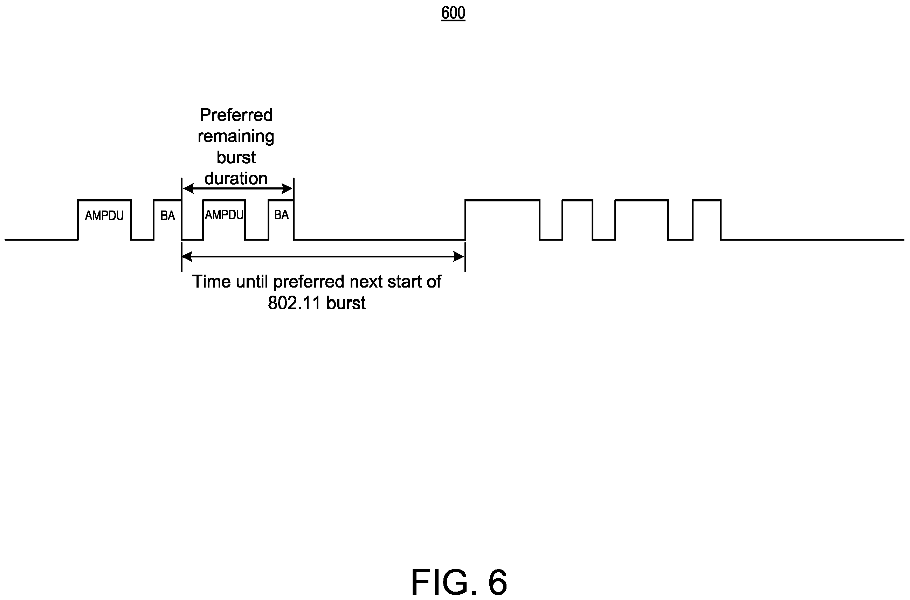

FIG. 6 illustrates an example plot 600 of a dynamic adjustment of burst duration and the inactivity period. In FIG. 6, the remaining burst duration and the time until the preferred next start of 802.11 activity can be indicated using a BA in response to an AMPDU. In the same way, these parameters can be indicated in a CTS in response to an RTS and in a TB PPDU in response to a trigger frame. In such instances, additional considerations can be included. For example, if the remaining burst duration is reduced after the medium is reserved for a longer duration using RTS, there can be unused reserved airtime left after the end of the burst to the particular non-AP. However, in that case, CF-end can be used by the AP in order to make this remaining duration available to other devices on the channel. The AP can also use this remaining reserved time for other exchanges (i.e., with other non-APs).

In 802.11bn, AMPDU-BA exchange mechanism can allow for recipient indication of constraints regarding immediate BA transmission, maximum MPDU count, maximum byte count of AMPDU to meet SIFS, response time for BA transmission, minimum delay, maximum delay for BA transmission and in-device coexistence issues. Originator indication within a PPDU that a BA transmission at SIFS after the PPDU may be not permitted.

802.11bn AMPDU-BA exchange mechanism can allows for the transmission by the AMPDU originator of PPDUs without any intervening gaps or with SIFS gap, where each PPDU is allowed to have different MCS/NSS/duration. A new action frame for semi-statically changing the Downlink/Uplink burst duration that can be supported by the non-AP in a coexistence environment. In addition to the burst duration, a preferred periodicity of the burst can also be indicated. The supported burst parameter can be per-link/per-channel/per-band.

Support for a mechanism or a field to dynamically indicate the remaining desired Downlink/Uplink burst duration immediately after the current transmission by the non-AP that can be supported by it in a coexistence device environment. The field can be included in a CTS, BA or a TB PPDU. In addition to the remaining burst duration, a preferred next occurrence of the burst can also be indicated.

The technical solutions can improve efficiency of latency-sensitive traffic transmissions using delayed block acknowledgement messages, for example, using a combination of systems that can include 802.11 devices and components (e.g., processing units, transceivers, antennas, receiving and transmitting process chains, data transmission and management components and so on). The technical solutions can receive information indicative of a block acknowledgement (BA) delay and include transmitting of an AMPDU. The technical solutions can identify that the BA for the AMPDU is within a delay range, determine that the that the BA is delayed and include postponing of the error message.

An aspect of the technical solutions relates to in device coexistence (IDC) optimization for concurrent client and mobile access point cases. In particular, the technical solutions provide systems and methods to optimize or improve IDC for a device functioning simultaneously as a mobile AP and a client connected to an infrastructure AP on the same link. The solutions provide improved and efficient coordination between the two WLAN (e.g., Wi-Fi) connections, based at least on the factors, such as channel overlap and the impact of additional wireless technologies (e.g., Bluetooth or Ultra-Wideband). To streamline communication, the technical solution can utilize Wi-Fi 8 features to provide dynamic and periodic unavailability schedules between the device and both the infrastructure AP and the peer-to-peer (P2P) client. By sending control frames (CF) or control responses (CR) with availability schedules, the device can minimize delays and overhead associated with independent communication channels. The technical solutions can allow for harmonization of IDC constraints across connections to facilitate consistent operation and maximize resource utilization.

The technical solutions relate to systems and methods to optimize in device coexistence (IDC) in a device that simultaneously functions as a mobile AP and a client connected to an infrastructure AP on the same link (e.g., a UE 102 acting as a tethering connection for another UE 102). A Wi-Fi ecosystem can have many instances in which a device plays the role of both a client that is connected to an infrastructure AP as well as a mobile AP that provides Wi-Fi connectivity to a farther or private peer to peer client. This can be referred to as "tethering" as an intermediate device tethers two communication links which could be Wi-Fi, wired or cellular. The technical solutions can relate to a case in which both links being tethered can Wi-Fi links. In an example, the configuration can be as follows: AP 104 ← Wi-Fi link (e.g., 160) → [client/mobile AP (e.g., UE 102 tethering as an AP] ← Wi-Fi link (e.g., 160) → [P2P client (e.g., another UE 102)]. The intermediate client/mobile AP (e.g., UE 102 tethering device) can multitask between the two Wi-Fi links which could be either on the same channel or on different channels. The same channel overlap can include coordination between the two links. Even when different channels are used for the 2 links, there may be hardware constraints at the intermediate client/mobile AP (e.g., tethering UE 102) which can trigger coordination of the activity on the two links. The technical solutions can utilize or deploy a communications function 130 at the intermediary tethering UE 102 to reduce or address IDC issues and improve throughput performance using the technical solutions discussed herein.

The intermediate client/mobile AP (e.g., tethering UE 102) can have Bluetooth/UWB devices that can additionally impact the coordination of its activity on the two connections. Normally and also as envisioned for Wi-Fi 8, for efficient operation, the intermediate client/mobile AP can communicate independently and separately to the infrastructure AP 104 on one side and with the P2P client on the other side, including any periodic or dynamic availability/unavailability instances and durations. Such instances indicated to the infrastructure AP 104 or to the P2P client can be correlated. However, having to communicate them independently can increase the delays and involve additional overheads, which the technical solutions can address using the techniques discussed herein.

The technical solution, which can be implemented in the Wi-Fi 8, can have any non-AP send to its AP 104 the unavailability/availability schedules 136 generated by the scheduler 134. These schedules 136 can include information on when the non-AP (e.g., second communications system 106) can become unavailable, for what duration, and subsequently available for how long, etc. The indications can be sent either in a control frame (CF) as the TXOP holder or in a control response (CR) as the TXOP responder. In one example, the intermediate client/ mobile AP (e.g., tethering UE 102) can send CF/CR to infra-AP with availability schedules 136. This CF/CR can also be intended for the P2P client which can infer the complementary unavailability schedules from it. The intermediate client/ mobile AP can send CF/CR to P2P client along with availability schedules. This CF/CR can also be intercepted by the infrastructure AP 104 to infer the complementary unavailability schedules from it. Further, the client/mobile AP can have other IDC constraints due to Bluetooth/UWB which can cause it to be dynamically unavailable for both infra-AP and P2P client. The CF/CR can be enhanced to indicate such dynamic unavailability that is common for both connections. Acknowledgement can be sought from both recipients in case of a CF for example, in a multi-STA BA format. Therefore, using the techniques of the technical solutions, both the end-receiver (e.g., P2P device UE 102) and the AP 104 can receive both the schedules 136 indicating the first periods 138 and the second periods 140 for transmissions from P2P device and the transmissions from AP 104, thus being fully aware of both transmissions being received by the intermediary UE 102. Using these schedules 136, the AP 104 and the P2P device can adjust the timing of their transmissions and determine the sizes or sizing of their AMPDUs and other transmission bursts within their respective first periods 138 (e.g., availability windows) to maximize their throughput.

In implementations, such as Wi-Fi 8, any non-AP (e.g., 106) can send to its AP 104, the periodic unavailability schedules 136, and vice versa. These schedules 136 can include information on when the non-AP (e.g., 106) can become periodically unavailable and for what duration. Such indications can also be harmonized across the two connections to adjust timing of the transmissions to the UE 102 via the shared resources 108, thereby making adjustments when opening in schedules 136 indicate additional available transmission time. For example, a client/ mobile AP can decode the target beacon transmission time (TBTT), etc. of the infrastructure AP and decide the time intervals during which it wants to decode beacons. It can configure those as the periodic unavailability with the P2P client. The client AP can decide on the beacon intervals for transmitting beacons meant for the P2P clients and configure them as periodic unavailability with the infrastructure AP. Further, the client/mobile AP can have other IDC constraints due to Bluetooth/UWB which can cause it to be periodically unavailable for both infra-AP and P2P client. Acknowledgement can be sought from both recipients in for example a multi-station BA format.

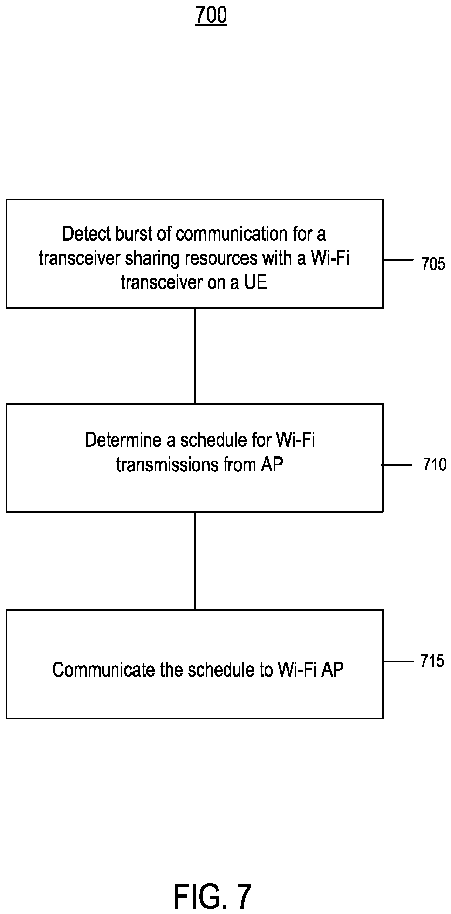

FIG. 7 illustrates an example method 700 for generating a schedule for Wi-Fi communications in response to a burst of communications exceeding its allocated time. The method 700 can be implemented using, for example, systems features or techniques discussed in connections with FIGs. 100-600, including for example system 100 implemented in a computer system 200. The method 700 can be implemented together with, or using any acts or operations of, the methods 800 and 900, and vice versa The method 700 can include acts or operations 705-715. At 705, the method can detect a burst of communication for a transceiver sharing resources with a Wi-Fi transceiver on a UE device. At 710, the method can determine a schedule for Wi-Fi transmissions from an AP. At 715, the method can communicate the schedule to the Wi-Fi AP.

At 705, the method can detect a burst of communication for a transceiver sharing resources with a Wi-Fi transceiver on a UE. The method can include detecting, by a device comprising a Wi-Fi transceiver and a second wireless transceiver sharing at least one antenna, a burst of communications received by the second wireless transceiver. The burst of communications can exceed a time period allocated for second wireless communications to be received via the at least one antenna. The device can be in communication with an access point (AP) to receive Wi-Fi communications from the access point.

The device can be a UE device that includes a communications function to monitor incoming network traffic via one or more transceivers at the device. The UE device can receive transmissions a Wi-Fi transceiver from a Wi-Fi access point (AP) device over a wireless link (e.g., a WLAN connection). The UE device can receive transmissions for second wireless communications via a second (e.g., non-Wi-Fi) transceiver sending and receiving wireless communications via a different technology or set of protocols. The second wireless communications can include at least one of: Bluetooth communications, Ultra-Wideband (UWB) communications, Long-Term Evolution (LTE) communications, Licensed Assisted Access (LAA) communications, New Radio (NR) communications or New Radio-Unlicensed (NR-U) communications. The second communications can be received from a second communications system, such as a system for wireless communications using any one or more of: Bluetooth, UWB, LTE, LAA, NR or NR-U. The Wi-Fi and the second transceiver can share one or more resources of the UE device, such as the antenna, RF front-end circuitry, processors or power management circuits, for receiving or transmitting the wireless communications.

The bust of communications can include a plurality of data packets from the second communications system that exceed a predetermined time period that is allocated for the second communications (e.g., non-Wi-Fi communications). The communications function can monitor the wireless communications received by the UE device and detect or determine that the burst of communications from the second communications system has reached or exceeded a threshold indicating that it to encroach or extend into, or that it has encroached or extended into, the time allocated for Wi-Fi transmissions.

The method can include detecting, by the device, that a second burst of communications received by the second wireless transceiver overlaps with a portion of the first time period allocated to receive Wi-Fi communications from the AP according to the schedule. The method can include detecting, by the device, a second burst of communications received by the second transceiver exceeding a second time period allocated for second wireless communications. For example, the communications function of the UE device can identify or detect a second burst of communications from the same or a different second communications system. The second burst of communications can include wireless communications in a third set of protocols or a third technology (e.g., different from Wi-Fi and the second wireless communications of the initial burst of communications).

At 710, the method can determine a schedule for Wi-Fi transmissions from an AP. The method can include determining, by the device responsive to the detection, a schedule for the AP to transmit Wi-Fi communications to the device. The schedule can include a burst limit of a first time period on a periodic basis of a second time period. The burst time limit can identify a time duration for the Wi-Fi transmissions within a first period that is within a second time period forming the periodic basis (e.g., periodicity) for planning the Wi-Fi transmissions. The schedule can include identification of the start and end of each of the first time period (e.g., indicating the time of availability for the Wi-Fi transmissions) and the second time period (e.g., indicating the whole period). From the difference between the first time period and the remainder of the second time period past the burst limit, the schedule can identify or point out for the Wi-Fi AP the time interval of when Wi-Fi transmissions are not available.

For instance, the first time period can be allocated for receiving the Wi-Fi transmissions. The second time period can correspond to a time duration between a start of the first time period and a start of a next first time period, which can be defined on the periodic basis of the second time period (e.g., cycles of the second time periods). The first time period and the next first time period (e.g., the first time periods in each of the second time periods of the periodicity) can be allocated for receiving or sending the Wi-Fi transmissions. In each of the cycles of the second time periods, the portions of the second time periods outside of the first time period within the second time period can correspond, or be indicative of, time that is not allocated for Wi-Fi transmissions and which can be used for scheduling or transmitting second wireless transmissions (e.g., Bluetooth, UWB, LTE, LAA, NR or NR-U).

The method can include the UE device adjusting the schedule responsive to detecting or identifying the overlap from the second burst of communications with respect to the time duration allocated or intended for Wi-Fi transmissions. The schedule can be adjusted to change at least one of a duration of the first time period or a duration of the second time period according to a duration of the second burst of communications. For example, when adjusting the schedule or generating the new schedule for the Wi-Fi AP, the schedule can change or reflect changes corresponding to the periodicity (e.g., frequency of the periods or time lengths of the second time periods). The schedule can, for example, include changes that lengthen or shorten the second time period or the first time period. The schedule can, for example, include changes that shift the time period within one or more second time periods (e.g., from the start of the second time period to the end of the second time period, or to the middle of the second time period or to the beginning of the second time period).

The method can include the UE device receiving, from the access point, an aggregated medium access control protocol data unit (AMPDU) of the Wi-Fi communication. The AMPDU can include a plurality of MPDUs that can be concatenated and transmitted in a series of a single burst transmission. The AMPDU can be transmitted to the UE device from the Wi-Fi AP. The method can include the UE device generating a block acknowledgement (BA) for the AMPDU. The BA can include information on success or failure of the transmission, or on success or failure of each of the MPDUs within the AMPDU. The UE device can communicate the schedule to the Wi-Fi AP, via the BA. For example, the communications function can insert the schedule into a portion of the BA and transmit the BA to the Wi-Fi AP to trigger or cause the Wi-Fi AP to update the schedule and modify the timing of the Wi-Fi transmission to avoid overlap with the burst of communications at the UE device.

The schedule can be a schedule for receiving the Wi-Fi communications at the UE device, via a first communication channel of a plurality of communication channels. The schedule can be a schedule for receiving the Wi-Fi communications at the UE device, via a particular communication band of a plurality of Wi-Fi communication bands. The schedule can be a schedule for a set period of time, such as one or more milliseconds, seconds, hours, days, weeks, months or years. The schedule can be a standing schedule that can be utilized by the Wi-Fi AP indefinitely.

The method can include determining, by the device responsive to detection of a second burst of communications received by the second transceiver, a second schedule. The second burst of communications can be determined by the UE device to be exceeding a second time period allocated for second wireless communications for the Wi-Fi AP to transmit Wi-Fi communications to the UE device via a second channel of the plurality of channels.

For instance, the schedule can be a schedule for Wi-Fi communications via a first communication channel or a band of a plurality of channels or bands, and the second schedule can be a schedule for Wi-Fi communications via a second channel or a band of the plurality of channels or bands. The second schedule can include a second burst limit of a third time period on a second periodic basis of a fourth time period. The third time period can be a time period within the fourth time period. The third time period of the second schedule can correspond to the first time period of the schedule and the fourth time period of the second schedule can correspond to the third time period of the schedule. The periodicity (e.g., lengths of the second and fourth time periods) can be same or different. The lengths of the first and third time periods (e.g., of time duration dedicated to Wi-Fi communications) can be same or different, depending on the determination of the communications function.

At 715, the method can communicate the schedule to the Wi-Fi AP. The method can include the UE device communicating the schedule to the Wi-Fi AP. The UE device can communicate the schedule or the second schedule to the Wi-Fi AP in one or more ways. For example, the UE device can transmit the schedule to the Wi-Fi AP via a transmission or a message, such as using one or more MPDUs or AMPDUs. The UE device can transmit the schedule or the second schedule via one or more BAs transmitted responsive to one or more received AMPDUs. The UE device can transmit the schedules to the Wi-Fi AP periodically or responsive to changes to the schedules.

The method can include the UE device receiving, during the next first time period, an AMPDU of the Wi-Fi communication. The AMPDU can include a size adjusted according to the next first time period. For instance, the AMPDU can be transmitted to the UE from the Wi-Fi AP following the UE's transmission to the schedule to the AP. The AMPDU can be sized according to the first time period of the schedule, so as to maximize the AMPDU size to fit within, but not exceed the first time period. For example, the UE device can receive, during the next first time period, an AMPDU comprising a size maximized to fit within the next first time period. The AMPDU can be sized to maximize the use of the first time period but also include a time window or portion to allow for a completion of transmission of a block acknowledgement (BA) of the AMPDU within the next first time period.

The method can include the UE device communicating the second schedule to the access point that was determined, responsive to the detection of the second burst of communications. The second schedule can be used by the Wi-Fi AP for coordinating or synchronizing communications to the UE device via a second channel of the plurality of channels according to a second burst limit of a third time period on a second periodic basis of a fourth time period.

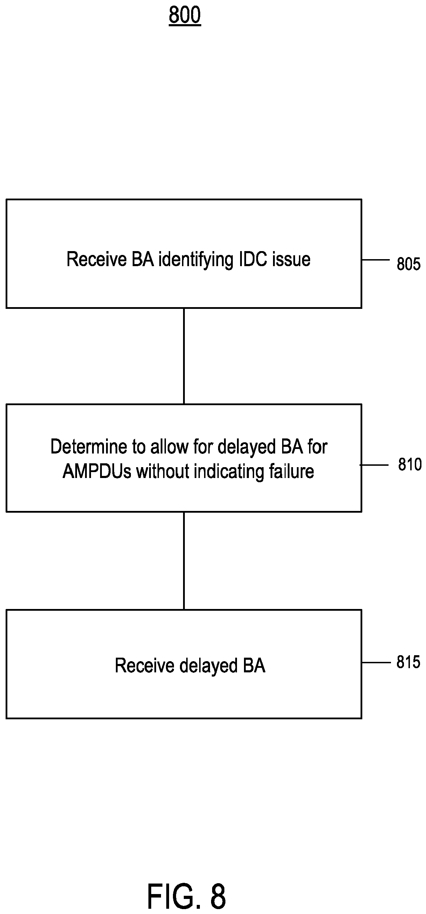

FIG. 8 illustrates an example method 800 for a Wi-Fi AP to delay receipt of the block acknowledgements (BAs) for transmitted AMPDUs in response to an IDC issue reported by the UE. The method 800 can be implemented using, for example, systems features or techniques discussed in connections with FIGs. 100-600, including for example, system 100 implemented in a computer system 200. The method 800 can be implemented together with, or using any acts or operations of, the methods 700 and 900, and vice versa The method 800 can include acts or operations 805-815. At 805, the method can receive BA identifying an in-device coexistence (IDC) issue. At 810, the method can determine to allow for delayed BA for AMPDUs without indicating failure. At 815, the method can receive delayed BA.

At 805, the method can receive BA identifying an in-device coexistence (IDC) issue. The method can include a Wi-Fi access point (AP) receiving, from a device, a block acknowledgement (BA). The BA can include information identifying existence of an in device-coexistence (IDC) issue on the UE device. The IDC issue can include, for example, a burst of wireless communications from a second communications system in the form of one or more of: Bluetooth, UWB, LTE, LAA, NR or NR-U. The AP can mark the UE device as a device with an IDC issue.

The burst of wireless communications can be detected or determined by the communications function of the UE device to extend beyond or encroach into the scheduled Wi-Fi communications between the UE device and the AP. The BA can identify the channel or a band at which the communication is occurring. The BA can identify a time duration for which the burst of communications is to encroach into the Wi-Fi communications.

The method can include the AP receiving, from a second device, a block acknowledgement (BA). The BA can include information not identifying an in device-coexistence issue on the second device. The AP can mark the UE device as a UE device that does not have an IDC issue. The AP can be configured to manage communications with the UE devices that provide notifications of existence of an IDC issue by allowing for delayed BAs without identifying AMPDU transmissions as failed. The AP can be configured to manage communications with UEs that do not notify of IDC issues by not allowing for delayed BA, but rather identifying AMPDU transmissions as failures if their BAs do not arrive in a predetermined time interval.

At 810, the method can determine to allow for delayed BA for AMPDUs without indicating failure. The method can include the AP determining, responsive to identifying the IDC issue, to allow one or more BAs from the device responsive to one or more aggregated medium access control protocol data units (AMPDUs) from the AP to be delayed past a short interframe space (SIFS) without being identified as a failure. For example, the AP can be configured to mark all AMPDUs whose BAs do not arrive within a predetermined time interval (e.g., SIFS) as failed transmissions. Responsive to receiving an IDC existence notification via a BA from a UE device, the AP can reconfigure its communication management with respect to that UE to provide for additional time interval for the BAs to arrive, and not identifying the AMPDUs of such late BAs as failed transmissions, despite the BAs being late.

The method can include the AP receiving, from a second device, a block acknowledgement (BA) comprising information not identifying an in device-coexistence issue on the second device. The communications function of the AP can identify that the device is configured for Wi-Fi communication in which transmission of one or more BAs for the one or more AMPDUs is delayed until after one or more SIFSs following the one or more AMPDUs. The AP can transmit, responsive to this configuration, a provision to communicate the plurality of AMPDUs according to the configuration. The provision can be indicated in at least one of a header of a physical layer or a header of a medium access control header of an AMPDU of the plurality of AMPDUs.

The method can include the AP identifying, from the information a channel quality information indicating a signal-to-interference-plus-noise ratio (SINR) margin. The method can include the communications function of the AP adjusting, responsive to the SINR margin, a modulation and coding scheme (MCS) for transmissions to the device. The AP can identify from the information received, an indication. The indication can include information on or corresponding to at least one of: a modulation and coding scheme (MCS) for transmissions to the device, a signal strength of the one or more AMPDUs or presence of one or more hidden nodes. The communications function at the AP can adjust, responsive to the indication, at least one of: the MCS, the signal strength, or transmission power corresponding to the one or more hidden nodes for a next AMPDU to be transmitted to the device. The AP can determine, from the information that all of the MPDUs within the one or more AMPDUs failed to be received by the device. The AP can receive the BA despite each of the MPDUs of the AMPDU failing .

In response to receiving no indication of an IDC issue with respect to a second UE device, the AP can transmit to the second device an AMPDU. After waiting a predetermined time length (e.g., SIFS) for the BA of the AMPDU to arrive from the second device, the AP can determine that the BA for the AMPDU is not received within the SIFS. The AP can, in response to this determination, identify that the transmission of the AMPDU has failed responsive to the BA not being received within the SIFS and no IDC issue being reported for the second UE device.

At 815, the method can receive delayed BA. The method can include the AP receiving, after the predetermined time period (e.g., the SIFS) and responsive to the determination, a second BA from the device. The second BA can include a plurality of acknowledgements corresponding to a plurality of AMPDUs received from the AP. For instance, the AP can transmit a plurality of AMPDUs to the UE device. The AP can determine, responsive to the determination at act 810, that a plurality of transmissions for the plurality of AMPDUs are successful regardless of the second BA received after the SIFS.

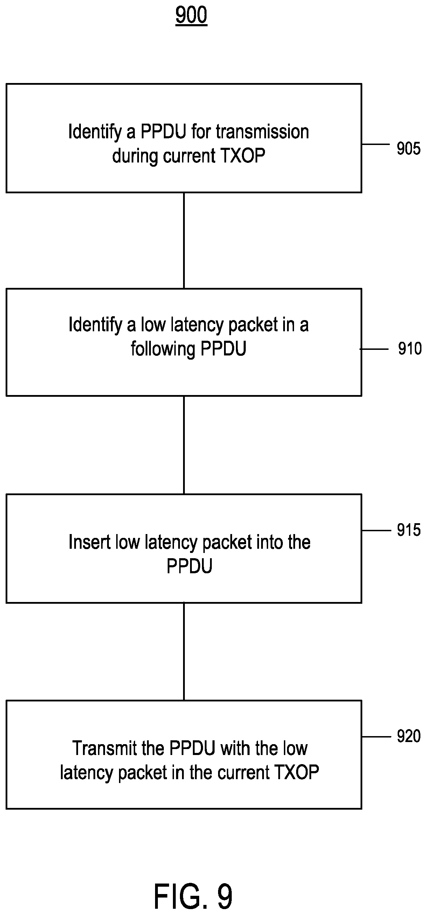

FIG. 9 illustrates an example method 900 for promoting transmission of a low latency packet of an MPDU scheduled for a later transmission by inserting the low latency packet into an MPDU scheduled for transmission in the current or upcoming transmission opportunity (TXOP). The method 900 can be implemented using, for example, systems features or techniques discussed in connections with FIGs. 100-600, including for example, system 100 implemented in a computer system 200. The method 900 can be implemented together with, or using any acts or operations of, the methods 700 and 800, and vice versa. The method 900 can include acts or operations 905-920. At 905, the method can identify a PPDU for transmission during a current TXOP. At 910, the method can identify a low latency packet in a following PPDU. At 915, the method can insert the low latency packet into the PPDU. At 920, the method can transmit the PPDU with the low latency packet in the current TXOP.

At 905, the method can identify a PPDU for transmission during a current transmission opportunity (TXOP). The method can include identifying, by a UE device communicating wirelessly with an access point (AP), a physical protocol data unit (PPDU) created and waiting to be transmitted to the AP during a current TXOP. The communications function can identify one or more MPDUs within a PPDU/AMPDU that are scheduled for transmission during a current TXOP. The one or more PPDUs can include headers including information about the PPDUs to be transmitted.

At 910, the method can identify a low latency packet in a following PPDU. The method can include the UE device identifying a low latency packet received by the device during the current TXOP. The low latency packet can be a low latency packet intended to be communicated to the AP within a next PPDU following the PPDU. The method can include identifying the low latency packet within the next PPDU scheduled for transmission via the current TXOP (e.g., but still in an MPDU that follows the MPDU of the act 905) or in a next TXOP following the current TXOP. The low latency packet can include, or be associated with, a header. The header can include information or data for the low latency packet. The header of the low latency packet can include data of the next MPDU.

At 915, the method can insert the low latency packet into the PPDU. The method can include the UE device inserting the low latency packet into the PPDU. The method can include the UE device determining to insert the low latency packet into the PPDU. For example, the communications function can insert the low latency packet into at least a portion of the MPDU, or adjacent to one or more MPDUs. The low latency packet can be inserted along with the header of the long latency packet.

The communications function can identify availability or opening to insert a second low latency packet of a third MPDU that follows the next or second MPDU. The communications function can insert the second low latency packet into the next MPDU in the place of the low latency packet that is now inserted into the (first) MPDU. The communications function can insert the second low latency packet into the (first) MPDU in response to determining that there is a sufficient availability of time to insert the second low latency packet.

At 920, the method can transmit the PPDU with the low latency packet in the current TXOP. The method can include the UE device transmitting the PPDU comprising the low latency packet to the within the current TXOP. The UE device can transmit the PPDU with the current TXOP and transmit the next MPDU within its own predetermined TXOP (e.g., either the current TXOP or the next TXOP). The UE device can transmit the PPDU via the shared resources and the antenna and according to the schedule.

When an element is referred to herein as being "connected" or "coupled" to another element, it is to be understood that the elements can be directly connected or coupled the other element or have intervening elements present between the connected or coupled elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first substrate and a second substrate) temporally or according to a sequence, although in some cases, these entities can include such a relationship. Nor do these terms limit the number of possible entities (e.g., delay circuit, filter, peak detector) that can operate within a system or environment. It should be understood that the systems described above can provide multiple ones of any or each of those components and these components can be provided on either a standalone structure or device or, in some embodiments, on multiple structures or devices in a distributed system.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above-described embodiments, methods, and examples, but by all embodiments and methods within the scope and spirit of the disclosure.

## Claims

1. A device (102) comprising a Wi-Fi transceiver (120) and a second wireless transceiver (110) sharing at least one antenna (142), the device (102) comprising one or more processors (210) coupled with memory (215) to:
detect a burst of communications received by the second wireless transceiver (110) exceeding a time period allocated for second wireless communications, the device (102) in communication with an access point, AP, (104) to receive Wi-Fi communications;
determine, responsive to the detection, a schedule (136) for the AP to transmit Wi-Fi communications to the device (102), the schedule (136) comprising a burst limit of a first time period on a periodic basis of a second time period; and
communicate the schedule (136) to the access point (104).

2. The device (102) of claim 1, wherein the first time period is allocated for receiving the Wi-Fi transmissions and the second time period corresponds to a time duration between a start of the first time period and a start of a next first time period on the periodic basis of the second time period, the next first time period allocated for receiving the Wi-Fi transmissions.

3. The device (102) of claim 2, comprising at least one of the following features:
comprising the one or more processors (210) to:
receive, during the next first time period, an aggregated medium access control protocol data unit, AMPDU, of the Wi-Fi communication, the AMPDU comprising a size adjusted according to the next first time period;
comprising the one or more processors (210) to:
receive, during the next first time period, an aggregated medium access control protocol data unit, AMPDU, of the Wi-Fi communication, the AMPDU sized with respect to a time length of the next first time period and allow for a completion of transmission of a block acknowledgement, BA, of the AMPDU within the next first time period.

4. The device (102) of any of claims 1 to 3, comprising the one or more processors (210) to:
detect that a second burst of communications received by the second wireless transceiver (110) overlaps with a portion of the first time period allocated to receive Wi-Fi communications from the AP according to the schedule (136); and
adjust, responsive to the overlap, the schedule (136).

5. The device (102) of claim 4, wherein the schedule (136) is adjusted to change at least one of a duration of the first time period or a duration of the second time period according to a duration of the second burst of communications.

6. The device (102) of any of claims 1 to 5, wherein the second wireless communications correspond to at least one of: Bluetooth communications, Ultra-Wideband, UWB, communications, Long-Term Evolution, LTE, communications, Licensed Assisted Access, LAA, communications, New Radio, NR, communications or New Radio-Unlicensed, NR-U, communications.

7. The device (102) of any of claims 1 to 6, comprising the one or more processors (210) to:
receive, from the access point (104), an aggregated medium access control protocol data unit, AMPDU, of the Wi-Fi communication;
generate a block acknowledgement, BA, for the AMPDU; and
communicate the schedule (136) to the access point (104), via the BA.

8. The device (102) of any of claims 1 to 7, comprising at least one of the following features:
wherein the schedule (136) is for receiving the Wi-Fi communications via a first communication channel of a plurality of communication channels;
comprising the one or more processors (210) to:
detect a second burst of communications received by the second transceiver (110) exceeding a second time period allocated for second wireless communications;
determine, responsive to the detection of the second burst of communications, a second schedule for the access point (104) to transmit Wi-Fi communications to the device (102) via a second channel of the plurality of channels, the second schedule comprising a second burst limit of a third time period on a second periodic basis of a fourth time period; and
communicate the second schedule to the access point (104).

9. An access point (104), comprising:
one or more processors (210) coupled with memory (215) to:
receive, from a device (102), a block acknowledgement, BA, comprising information identifying existence of an in device-coexistence issue on the device (102);
determine, responsive to identifying the in device-coexistence issue, to allow one or more BAs from the device (102) responsive to one or more aggregated medium access control protocol data units, AMPDUs, from the AP to be delayed past a short interframe space, SIFS, without being identified as a failure; and
receive, after the SIFS and responsive to the determination, a second BA from the device (102), the second BA comprising a plurality of acknowledgements corresponding to a plurality of AMPDUs received from the AP.

10. The access point (104) of claim 9, comprising at least one of the following features:
comprising the one or more processors (210) to:
determine, responsive to the determination, that a plurality of transmissions for the plurality of AMPDUs are successful regardless of the second BA received after the SIFS;
comprising the one or more processors (210) to:
receive, from a second device, a block acknowledgement, BA, comprising information not identifying an in device-coexistence issue on the second device;
transmit, to a second device, an AMPDU;
determine that a BA for the AMPDU is not received within the SIFS; and
identify that the transmission of the AMPDU has failed responsive to the BA not being received within the SIFS.

11. The access point (104) of claim 9 or 10, comprising at least one of the following features:
comprising the one or more processors (210) to:
identify that the device (102) is configured for Wi-Fi communication in which transmission of one or more BAs for the one or more AMPDUs is delayed until after one or more SIFSs following the one or more AMPDUs; and
transmit, responsive to the configuration, a provision to communicate the plurality of AMPDUs according to the configuration;
wherein the provision is indicated in at least one of a header of a physical layer or a header of a medium access control header of an AMPDU of the plurality of AMPDUs.

12. The access point (104) of any of claims 9 to 11, comprising the one or more processors (210) to:
identify, from the information a channel quality information indicating a signal-to-interference-plus-noise ratio, SINR, margin; and
adjust, responsive to the SINR margin, a modulation and coding scheme, MCS, for transmissions to the device (102).

13. The access point (104) of any of claims 9 to 12, comprising at least one of the following features:
comprising the one or more processors (210) to:
identify, from the information an indication corresponding to at least one of: a modulation and coding scheme, MCS, for transmissions to the device (102), a signal strength of the one or more AMPDUs or presence of one or more hidden nodes; and
adjust, responsive to the indication, for a next AMPDU to be transmitted to the device (102), at least one of: the MCS, the signal strength, or transmission power corresponding to the one or more hidden nodes;
comprising the one or more processors (210) to determine, from the information, that all of the MPDUs within the one or more AMPDUs failed to be received by the device (102).

14. A device (102) communicating wirelessly with an access point, AP, (104), the device (102) comprising:
one or more processors (210) coupled with memory (215) to:
identify a physical protocol data unit, PPDU, created and waiting to be transmitted to an access point, AP, (104) during a current transaction opportunity, TXOP;
identify a low latency packet received by the device (102) during the current TXOP, the low latency packet to be communicated to the AP within a next PPDU following the PPDU;
insert the low latency packet into the PPDU; and
transmit the PPDU comprising the low latency packet to the AP within the current TXOP.

15. The device (102) of claim 14, comprising the one or more processors (210) to:
identify the low latency packet within the next PPDU scheduled for transmission via a next TXOP following the current TXOP; and
determine to insert the low latency packet into the PPDU.
